# EUROPEAN PATENT APPLICATION

(11) **EP 4 827 148 A1**
(43) Date of publication of application: **21.10.2026**
(21) Application number: 24910590.9
(22) Date of filing: 04.12.2024
(51) Int. Cl.: H04W 24/02

(54) **COMMUNICATION METHOD AND APPARATUS, AND SYSTEM**

(30) Priority: 26.12.2023 CN 202311819274
(71) Applicant: Huawei Technologies Co., Ltd., Shenzhen, Guangdong 518129 (CN)
(72) Inventor: ZHU, Fangyuan, Shenzhen, Guangdong 518129 (CN); YANG, Yanmei, Shenzhen, Guangdong 518129 (CN); LI, Yan, Shenzhen, Guangdong 518129 (CN); GE, Cuili, Shenzhen, Guangdong 518129 (CN)
(74) Representative: Huawei European IPR
(86) International application number: PCT/CN2024/136769
(87) International publication number: WO 2025/139658

(57) **Abstract**

This application relates to a communication method, apparatus, and system. A third core network element determines a first computing resource based on a delay threshold of a first compute task and a first delay, where the first computing resource is a computing resource needed by a compute node to process the first compute task, the delay threshold is related to an end-to-end delay requirement of the first compute task, and the first delay is a transmission delay for transmitting a packet corresponding to the first compute task between a terminal device and an access network element. The third core network element sends a first request, where the first request is used to trigger a first compute node to process the first compute task by using the first computing resource. In embodiments of this application, a sum of a processing delay of the first compute node and a packet transmission delay (that is, an actual end-to-end delay) can meet the end-to-end delay requirement of the first compute task as much as possible, to improve access efficiency of the first compute task and improve user experience.

## Description

### CROSS-REFERENCE TO RELATED APPLICATIONS

This application claims priority to Chinese Patent Application No. 202311819274.9, filed with the China National Intellectual Property Administration on December 26, 2023 and entitled "COMMUNICATION METHOD, APPARATUS, AND SYSTEM", which is incorporated herein by reference in its entirety.

### TECHNICAL FIELD

This application relates to the field of communication technologies, and in particular, to a communication method, apparatus, and system.

### BACKGROUND

A current 3rd Generation Partnership Project (3rd Generation Partnership Project, 3GPP) system may establish a connection for accessing a compute node, to implement access of UE to a service processed by the compute node. The compute node may be a service server. From an end-to-end perspective (for example, user equipment (user equipment, UE) is one end, and a compute node is the other end), a service delay includes a transmission delay of a packet of a service in a network (where the transmission delay is, for example, a round trip delay, and may include an uplink transmission delay and a downlink transmission delay of the packet of the service in the network), and includes a processing delay of a compute node that processes the service. For example, the transmission delay (transmission delay) of the packet in the network includes a transmission delay of the packet between the UE and the compute node. Using a scenario in which the compute node is a service server as an example, the processing delay of the compute node is also referred to as a server processing delay (server processing delay), and the processing delay can reflect quality of service of the server.

When some interference factors occur, for example, network congestion occurs, the transmission delay of the packet in the network may be increased, which may cause an increase in an end-to-end delay of the service, affecting service access efficiency and degrading user experience.

### SUMMARY

Embodiments of this application provide a communication method, apparatus, and system, to improve service access efficiency.

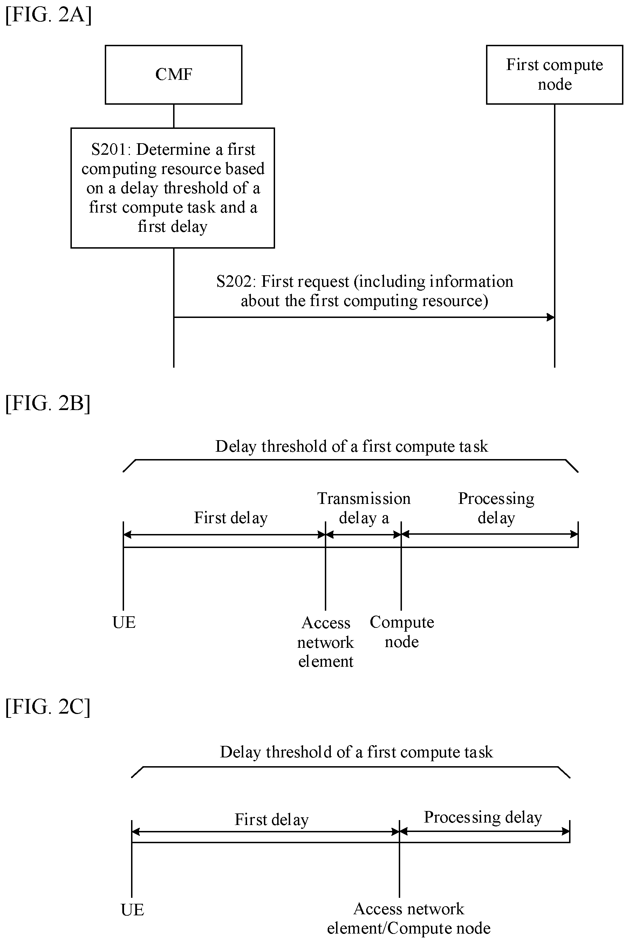

According to a first aspect, a first communication method is provided. The method may be performed by a core network element, may be performed by another device having functions of the core network element, or may be performed by a chip system (or a chip) or another functional module, where the chip system or the functional module can implement the functions of the core network element, and the chip system or the functional module is, for example, disposed in the core network element. The core network element is, for example, a third core network element. An example in which the method is performed by the third core network element is used in the following descriptions. Optionally, the third core network element is, for example, a computing management function (computing management function, CMF) or another core network element that can implement a similar function. Optionally, for a step performed by the third core network element, refer to a step performed by the CMF in the following embodiment shown in any one of FIG. 2A, FIG. 3A and FIG. 3B, FIG. 5, FIG. 6, FIG. 7, FIG. 8, or FIG. 9. The method includes: determining a first computing resource based on a delay threshold of a first compute task and a first delay, where the first computing resource is a computing resource needed by a compute node to process the first compute task, the delay threshold is related to an end-to-end delay requirement of the first compute task, the end-to-end delay requirement is a delay requirement for transmitting and processing a packet corresponding to the first compute task between a terminal device and the compute node, and the first delay is a transmission delay for transmitting the packet corresponding to the first compute task between the terminal device and an access network element; and sending a first request, where the first request is used to trigger a first compute node to process the first compute task by using the first computing resource.

The delay threshold is related to the end-to-end delay requirement. For example, in an implementation, the delay threshold may be determined based on the end-to-end delay requirement. In this embodiment of this application, the first computing resource may be determined based on the delay threshold of the first compute task and the first delay, which is equivalent to determining, based on the end-to-end delay requirement and the transmission delay of the first compute task, a computing resource (the first computing resource) that the compute node should provide for the first compute task. The first compute node processes the first compute task based on the first computing resource. In this case, the sum of the processing delay of the first compute node and the packet transmission delay (namely, the actual end-to-end delay) can meet the end-to-end delay requirement of the first compute task, to improve access efficiency of the first compute task and improve user experience.

In an optional implementation, the delay threshold is the end-to-end delay requirement. For example, the delay threshold may be greater than the end-to-end delay requirement, may be less than the end-to-end delay requirement, or may be equal to the end-to-end delay requirement. How to determine the delay threshold based on the end-to-end delay requirement is not limited in this specification.

In an optional implementation, the method further includes: determining the first compute node based on the first computing resource. If no compute node is selected, the third core network element may select a compute node based on the first computing resource, so that the selected compute node can provide the first computing resource, to ensure execution of the compute task.

In an optional implementation, determining the first compute node based on the first computing resource includes: sending a second request to a first core network element, where the second request is used to request to discover (or provide or indicate) a compute node, and the second request further includes information about the first computing resource; and receiving information about the first compute node from the first core network element, where the information about the first compute node includes an identifier of the first compute node. For example, if the compute node is registered with the first core network element, the third core network element may request the first core network element to discover the compute node. Alternatively, if the compute node is registered with the third core network element, or the first core network element sends registration information of the compute node to the third core network element, the third core network element may determine the compute node.

In an optional implementation, the information about the first compute node further includes information about a maximum computing resource supported by the first compute node. The third core network element learns of information about a maximum computing resource supported by the first compute node. If a computing resource used to process the first compute task subsequently changes, the third core network element may determine whether the first compute node can provide the changed computing resource. If a capability of the first compute node is insufficient to provide the changed computing resource, the third core network element may also reselect a compute node and the like in a timely manner. This helps improve processing efficiency of the compute task.

In an optional implementation, the method further includes: sending information about the first compute task to the access network element; and receiving first information from the access network element, where the first information includes information about the first delay. The third core network element may send the information about the first compute task to the access network element, and the access network element may predict, based on the information about the first compute task, a delay, that is, the first delay, for transmitting a packet corresponding to the first compute task between the access network element and the terminal device, so that the third core network element can obtain the first delay.

In an optional implementation, the method further includes: sending first time information to the access network element, where the first time information indicates time at which the access network element determines the first delay. Alternatively, the access network element may determine the first time information, or the first time information may be preconfigured in the access network element or predefined in a protocol. If the access network element starts to predict the first delay only when the first compute task starts to be executed or after the first compute task starts to be executed, after obtaining the first delay, the third core network element requests the first compute node to provide a corresponding computing resource to process the first compute task. In this process, the first compute task may have been executed for a period of time, or may even have been executed. Such a computing resource adjustment policy is delayed, affecting execution of the first compute task. Therefore, the access network element in this embodiment of this application may predict the first delay in advance by using the first time information. For example, the first compute task may be executed only after the computing resource adjustment is completed, so that impact on the first compute task can be reduced.

In an optional implementation, the first information further indicates validity duration of the first delay. The validity duration means that using the first delay is feasible within the validity duration. However, if the validity duration is exceeded, the first delay is invalid. If the third core network element needs to use an air interface delay (for example, use the air interface delay to determine a computing resource), the third core network element may need to obtain the air interface delay again. This manner helps improve accuracy of the first delay.

In an optional implementation, the method further includes: receiving second information from a second core network element, where the second information includes the information about the first compute task and the end-to-end delay requirement of the first compute task; or sending a third request to a database network element, where the third request is used to request the information about the first compute task and the end-to-end delay requirement of the first compute task, and receiving the information about the first compute task and the end-to-end delay requirement of the first compute task from the database network element. The information about the first compute task, the end-to-end delay requirement, and the like may be from the second core network element, or may be from the database network element, or may be obtained in another manner. This is not limited herein.

In an optional implementation, the information about the first compute task includes one or more of the following: a maximum uplink data amount corresponding to the first compute task, a maximum downlink data amount corresponding to the first compute task, or an execution periodicity of the first compute task. In addition, the information about the first compute task may further include other information, or the information about the first compute task may not include the foregoing information but include other information. This is not limited herein.

In an optional implementation, the method further includes: receiving information about a second delay from the access network element, where the second delay is a transmission delay for transmitting the packet corresponding to the first compute task between the terminal device and the access network element, and the second delay is different from the first delay; determining a second computing resource based on the delay threshold and the second delay, where the second computing resource is a computing resource needed by the compute node to process the first compute task; and sending a fourth request, where the fourth request is used to trigger a second compute node to process the first compute task by using the second computing resource. If the air interface delay changes, for example, changes from the first delay to the second delay, the access network element may notify the third core network element, and the third core network element may re-determine a computing resource based on the change, so that an actual end-to-end delay of the first compute task can still meet the end-to-end delay requirement of the first compute task. The second compute node and the first compute node may be a same compute node, or may be different compute nodes.

In an optional implementation, the method further includes: when determining that the first compute node is not capable of providing the second computing resource, determining the second compute node based on the second computing resource. For example, if the first compute node can provide the second computing resource, the second compute node and the first compute node may be a same compute node; or if the first compute node cannot provide the second computing resource, the second compute node and the first compute node may be different compute nodes, for example, the third core network element reselects a second compute node that can provide the second computing resource.

In an optional implementation, the first compute node is a UPF, an access network element, or a service server. The second compute node is a UPF, an access network element, or a service server. The first compute node and the second compute node may be of a same type, for example, both are UPFs, or both are service servers. Alternatively, the first compute node and the second compute node may be of different types, for example, the first compute node is an access network element, and the second compute node is a UPF or a service server.

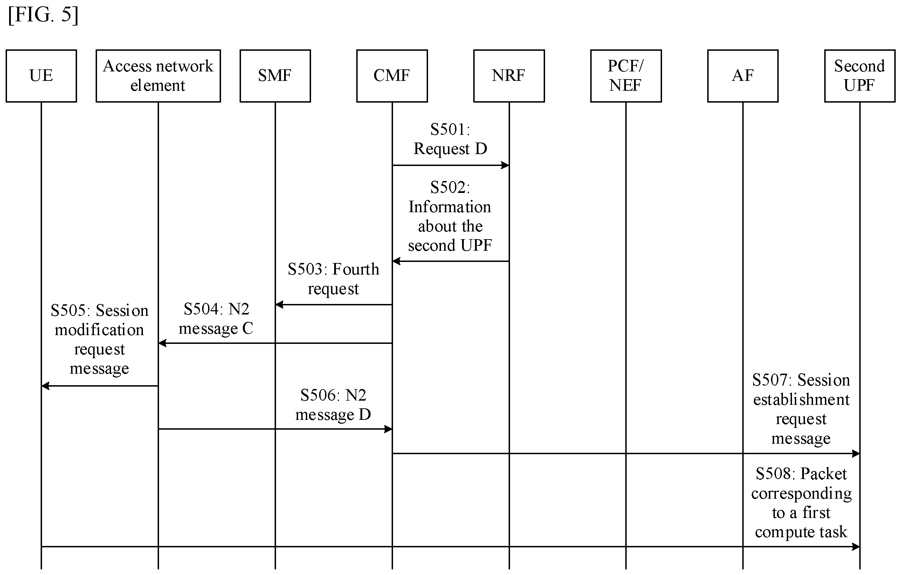

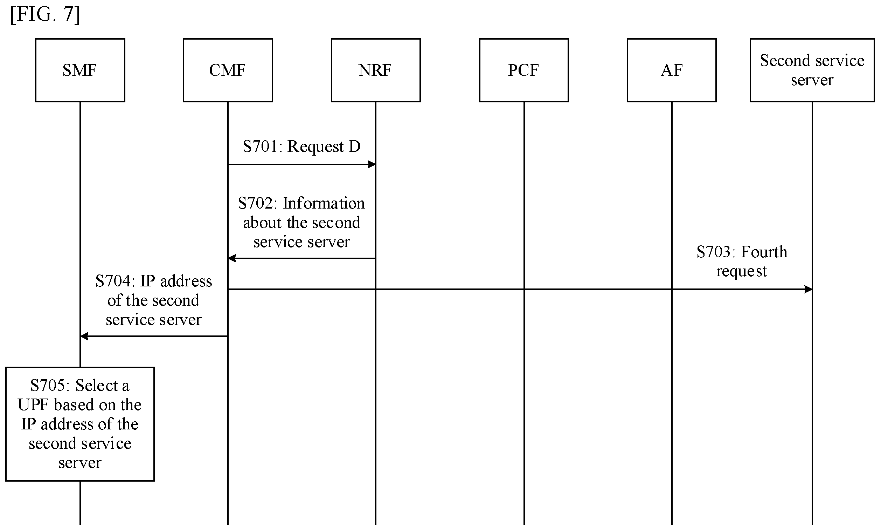

According to a second aspect, a second communication method is provided. The method may be performed by a compute node, or may be performed by another device that includes a function of the compute node, or may be performed by a chip system (or a chip) or another functional module. The chip system or the functional module can implement a function of the compute node. The chip system or the functional module is, for example, disposed in the compute node. The compute node is, for example, a first compute node. The first compute node is, for example, a UPF, an access network element, or a service server, or may be another network element in a network. Optionally, for a step performed by the compute node, refer to a step performed by the first compute node in the following embodiment shown in any one of FIG. 2A, FIG. 3A and FIG. 3B, FIG. 5, FIG. 6, FIG. 7, FIG. 8, or FIG. 9; or for a step performed by the compute node, refer to a step performed by the second compute node in the following embodiment shown in FIG. 5 or FIG. 7. The method includes: receiving a first request, where the first request is used to trigger a first compute node to process a first compute task by using a first computing resource; and processing, based on the first request, the first compute task by using the first computing resource.

In an optional implementation, a fourth request is received, where the fourth request is used to trigger the first compute node to process the first compute task by using a second computing resource; adjust, to the second computing resource according to the fourth request, a computing resource scheduled for the first compute task; and process the first compute task by using the second computing resource.

In an optional implementation, the first compute node is a UPF, an access network element, or a service server.

In an optional implementation, the method further includes: sending a registration request, where the registration request includes an identifier of the first compute node and information about a maximum computing resource supported by the first compute node. For example, the first compute node may be registered with a second core network element or a third core network element. This is not limited.

For technical effects brought by the second aspect or the optional implementations, refer to the descriptions of the technical effects of the first aspect or the corresponding implementations.

According to a third aspect, a third communication method is provided. The method may be performed by an access network element, or may be performed by another device that includes a function of the access network element, or may be performed by a chip system (or a chip) or another functional module. The chip system or the functional module can implement a function of the access network element. The chip system or the functional module is, for example, disposed in the access network element. Optionally, the access network element is, for example, a base station, or another network element in the access network. Optionally, for a step performed by the access network element, refer to a step performed by the access network element in the following embodiment shown in any one of FIG. 2A, FIG. 3A and FIG. 3B, FIG. 5, FIG. 6, FIG. 7, FIG. 8, or FIG. 9. The method includes: receiving information about a first compute task from a core network element; determining a first delay, where the first delay is a transmission delay for transmitting a packet corresponding to the first compute task between a terminal device and an access network element; and sending first information to the core network element, where the first information includes information about the first delay.

In an optional implementation, the method further includes: receiving first time information from the core network element; and determining the first delay includes: determining the first delay at time determined based on the first time information.

In an optional implementation, the first information further indicates validity duration of the first delay.

In an optional implementation, a first request from the core network element is received, where the first request is used to trigger the access network element to process the first compute task by using the first computing resource. For example, if the access network element is a compute node, the access network element may receive the first request, and may provide a first computing resource to process the first compute task.

In an optional implementation, the method further includes: determining that the transmission delay for transmitting the packet corresponding to the first compute task between the terminal device and the access network element is changed to a second delay; and sending information about the second delay to the core network element.

For technical effects brought by the third aspect or the optional implementations, refer to the descriptions of the technical effects of the first aspect or the corresponding implementations.

According to a fourth aspect, a fourth communication method is provided. The method may be performed by a core network element, or may be performed by another device that includes a function of the core network element, or may be performed by a chip system (or a chip) or another functional module. The chip system or the functional module can implement a function of the core network element. The chip system or the functional module is, for example, disposed in the core network element. The core network element is, for example, a second core network element. An example in which the method is performed by the second core network element is used in the following descriptions. Optionally, the second core network element is, for example, a PCF or an NEF, or another core network element that can implement a similar function. Optionally, for a step performed by the second core network element, refer to a step performed by the PCF in the following embodiment shown in any one of FIG. 2A, FIG. 3A and FIG. 3B, FIG. 5, FIG. 6, FIG. 7, FIG. 8, or FIG. 9, or a step performed by the NEF in the following embodiment shown in any one of FIG. 2A, FIG. 3A and FIG. 3B, FIG. 5, FIG. 6, FIG. 7, FIG. 8, or FIG. 9. The method includes: receiving information about a correspondence between information about a first compute task and a DNN and/or S-NSSAI, and receiving an end-to-end delay requirement of the first compute task; determining second information based on the received information, where the second information includes the information about the correspondence and the end-to-end delay requirement; and sending the second information to the core network element.

For technical effects brought by the fourth aspect or the optional implementations, refer to the descriptions of the technical effects of the first aspect or the corresponding implementations.

According to a fifth aspect, a communication apparatus is provided. The communication apparatus may be the third core network element according to any one of the first aspect to the fourth aspect. The communication apparatus has a function of the third core network element. The communication apparatus is, for example, the third core network element, a large device including the third core network element, or a functional module, for example, a baseband apparatus or a chip system, in the third core network element. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). The transceiver unit can implement a sending function and a receiving function. When the transceiver unit implements the sending function, the transceiver unit may be referred to as a sending unit (sometimes also referred to as a sending module). When the transceiver unit implements the receiving function, the transceiver unit may be referred to as a receiving unit (sometimes also referred to as a receiving module). The sending unit and the receiving unit may be a same functional module, the functional module is referred to as a transceiver unit, and the functional module can implement the sending function and the receiving function. Alternatively, the sending unit and the receiving unit may be different functional modules, and the transceiver unit is a general term for these functional modules.

In an optional implementation, the processing unit is configured to determine a first computing resource based on a delay threshold of a first compute task and a first delay, where the first computing resource is a computing resource needed by a compute node to process the first compute task, the delay threshold is related to an end-to-end delay requirement of the first compute task, the end-to-end delay requirement is a delay requirement for transmitting and processing a packet corresponding to the first compute task between a terminal device and the compute node, and the first delay is a transmission delay for transmitting the packet corresponding to the first compute task between the terminal device and an access network element; and the transceiver unit (or the sending unit) is configured to send a first request, where the first request is used to trigger a first compute node to process the first compute task by using the first computing resource.

In an optional implementation, the communication apparatus further includes a storage unit (sometimes also referred to as a storage module). The processing unit is configured to be coupled to the storage unit, and execute a program or instructions in the storage unit, to cause the communication apparatus to perform a function of the third core network element according to any one of the first aspect to the fourth aspect.

According to a sixth aspect, a communication apparatus is provided. The communication apparatus may be the first compute node according to any one of the first aspect to the fourth aspect. The communication apparatus has a function of the first compute node. The communication apparatus is, for example, the first compute node, a large device including the first compute node, or a functional module, for example, a baseband apparatus or a chip system in the first compute node. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). For an implementation of the transceiver unit, refer to the descriptions of the fifth aspect.

In an optional implementation, the transceiver unit (or the receiving unit) is configured to receive a first request, where the first request is used to trigger the first compute node to process a first compute task by using a first computing resource; and the processing unit is configured to process, based on the first request, the first compute task by using the first computing resource.

In an optional implementation, the communication apparatus further includes a storage unit (sometimes also referred to as a storage module). The processing unit is configured to be coupled to the storage unit, and execute a program or instructions in the storage unit, to cause the communication apparatus to perform a function of the first compute node according to any one of the first aspect to the fourth aspect.

According to a seventh aspect, a communication apparatus is provided. The communication apparatus may be the access network element according to any one of the first aspect to the fourth aspect. The communication apparatus has a function of the access network element. The communication apparatus is, for example, the access network element, a large device including the access network element, or a functional module, for example, a baseband apparatus or a chip system, in the access network element. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). For an implementation of the transceiver unit, refer to the descriptions of the fifth aspect.

In an optional implementation, the transceiver unit (or the receiving unit) is configured to receive information about a first compute task from a core network element; the processing unit is configured to determine a first delay, where the first delay is a transmission delay for transmitting a packet corresponding to the first compute task between a terminal device and an access network element; and the transceiver unit (or the sending unit) is configured to send first information to the core network element, where the first information includes information about the first delay.

In an optional implementation, the communication apparatus further includes a storage unit (sometimes also referred to as a storage module). The processing unit is configured to be coupled to the storage unit, and execute a program or instructions in the storage unit, to cause the communication apparatus to perform a function of the access network element according to any one of the first aspect to the fourth aspect.

According to an eighth aspect, a communication apparatus is provided. The communication apparatus may be the second core network element according to any one of the first aspect to the fourth aspect. The communication apparatus has functions of the second core network element. The communication apparatus is, for example, the second core network element, a large device including the second core network element, or a functional module, for example, a baseband apparatus or a chip system, in the second core network element. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). For an implementation of the transceiver unit, refer to the descriptions of the fifth aspect.

In an optional implementation, the transceiver unit (or the receiving unit) is configured to receive information about a correspondence between information about a first compute task and a DNN and/or S-NSSAI, and receiving an end-to-end delay requirement of the first compute task; the processing unit is configured to determine second information based on the received information, where the second information includes the information about the correspondence and the end-to-end delay requirement; and the transceiver unit (or the sending unit) is configured to send the second information to the core network element.

In an optional implementation, the communication apparatus further includes a storage unit (sometimes also referred to as a storage module). The processing unit is configured to be coupled to the storage unit, and execute a program or instructions in the storage unit, to cause the communication apparatus to perform a function of the third core network element according to any one of the first aspect to the fourth aspect.

According to a ninth aspect, a communication apparatus is provided. The communication apparatus may be a third core network element, or may be a chip or a chip system used in the third core network element. The communication apparatus includes a communication interface and a processor, and optionally, further includes a memory. The memory is configured to store a computer program. The processor is coupled to the memory and the communication interface. When the processor reads the computer program or instructions, the communication apparatus is caused to perform the method performed by the third core network element in the foregoing aspects.

According to a tenth aspect, a communication apparatus is provided. The communication apparatus may be a first compute node, or may be a chip or a chip system used in the first compute node. The communication apparatus includes a communication interface and a processor, and optionally, further includes a memory. The memory is configured to store a computer program. The processor is coupled to the memory and the communication interface. When the processor reads the computer program or instructions, the communication apparatus is caused to perform the method performed by the first compute node in the foregoing aspects.

According to an eleventh aspect, a communication apparatus is provided. The communication apparatus may be an access network element, or may be a chip or a chip system used in the access network element. The communication apparatus includes a communication interface and a processor, and optionally, further includes a memory. The memory is configured to store a computer program. The processor is coupled to the memory and the communication interface. When the processor reads the computer program or instructions, the communication apparatus is caused to perform the method performed by the access network element in the foregoing aspects.

According to a twelfth aspect, a communication apparatus is provided. The communication apparatus may be a second core network element, or may be a chip or a chip system used in the second core network element. The communication apparatus includes a communication interface and a processor, and optionally, further includes a memory. The memory is configured to store a computer program. The processor is coupled to the memory and the communication interface. When the processor reads the computer program or instructions, the communication apparatus is caused to perform the method performed by the second core network element in the foregoing aspects.

According to a thirteenth aspect, a communication system is provided, including a third core network element and an access network element. The third core network element is configured to perform the method performed by the third core network element according to any one of the first aspect to the fourth aspect, and the access network element is configured to perform the method performed by the access network element according to any one of the first aspect to the fourth aspect. For example, the third core network element may be implemented by the communication apparatus according to the fifth aspect or the ninth aspect, and the access network element may be implemented by the communication apparatus according to the seventh aspect or the eleventh aspect.

Optionally, the communication system may further include a first compute node. The first compute node is configured to perform the method performed by the first compute node according to any one of the first aspect to the fourth aspect. For example, the first compute node may be implemented by the communication apparatus according to the sixth aspect or the tenth aspect.

Optionally, the communication system may further include a second core network element. The second core network element is configured to perform the method performed by the second core network element according to any one of the first aspect to the fourth aspect. For example, the second core network element may be implemented by the communication apparatus according to the eighth aspect or the twelfth aspect.

According to a fourteenth aspect, another communication system is provided, including a third core network element and a first compute node. The third core network element is configured to perform the method performed by the third core network element according to any one of the first aspect to the fourth aspect, and the first compute node is configured to perform the method performed by the compute node according to any one of the first aspect to the fourth aspect. For example, the third core network element may be implemented by the communication apparatus according to the fifth aspect or the ninth aspect, and the first compute node may be implemented by the communication apparatus according to the sixth aspect or the tenth aspect.

Optionally, the communication system may further include an access network element. The access network element is configured to perform the method performed by the access network element according to any one of the first aspect to the fourth aspect. For example, the access network element may be implemented by the communication apparatus according to the seventh aspect or the eleventh aspect.

Optionally, the communication system may further include a second core network element. The second core network element is configured to perform the method performed by the second core network element according to any one of the first aspect to the fourth aspect. For example, the second core network element may be implemented by the communication apparatus according to the eighth aspect or the twelfth aspect.

According to a fifteenth aspect, a computer-readable storage medium is provided. The computer-readable storage medium is configured to store a computer program or instructions, and when the computer program or the instructions are run, the method performed by the third core network element, the access network element, the first compute node, or the second core network element in the foregoing aspects is implemented.

According to a sixteenth aspect, a computer program product including instructions is provided. When the computer program product runs on a computer, the method in the foregoing aspects is implemented.

According to a seventeenth aspect, a chip system is provided, including a processor and an interface. The processor is configured to: invoke instructions from the interface and run the instructions, so that the chip system implements the method in the foregoing aspects.

### BRIEF DESCRIPTION OF DRAWINGS

FIG. 1A is a diagram of a 5G network based on a service-based architecture;
FIG. 1B is a diagram of a 5G network based on a point-to-point interface;
FIG. 2A, FIG. 3A and FIG. 3B, FIG. 5, FIG. 6, FIG. 7, FIG. 8, and FIG. 9 are flowcharts of several communication methods according to embodiments of this application;
FIG. 2B and FIG. 2C are diagrams of several delays according to embodiments of this application;
FIG. 4 is a diagram in which an access network element determines an air interface delay based on prediction advance time according to an embodiment of this application;
FIG. 10 is a diagram of end-to-end delay assurance according to an embodiment of this application;
FIG. 11 is a diagram of an apparatus according to an embodiment of this application; and
FIG. 12 is a diagram of another apparatus according to an embodiment of this application.

### DESCRIPTION OF EMBODIMENTS

To make objectives, technical solution, and advantages of embodiments of this application clearer, the following further describes embodiments of this application in detail with reference to the accompanying drawings.

In embodiments of this application, unless otherwise specified, a quantity of nouns represents "a singular noun or a plural noun", that is, "one or more". "At least one" means one or more, and "a plurality of" means two or more. "And/or" describes an association relationship between associated objects, and represents that three relationships may exist. For example, A and/or B may represent the following three cases: Only A exists, both A and B exist, and only B exists, where A and B may be singular or plural. The character "/" generally indicates an "or" relationship between the associated objects. For example, A/B indicates A or B. "At least one of the following items (pieces)", "one or more items of", or a similar expression means any combination of these items, including a single item (piece) or any combination of a plurality of items (pieces). For example, at least one of a, b, or c, or one or more of a, b, or c represents a, b, c, a and b, a and c, b and c, or a, b, and c. Each of a, b, or c may be singular or plural.

Ordinal numbers such as "first" and "second" in embodiments of this application are intended to distinguish between a plurality of objects, but are not intended to limit sizes, content, an order, a time sequence, priorities, importance, or the like of the plurality of objects. In addition, step numbers in embodiments described in embodiments of this application are merely intended to distinguish between different steps, but are not intended to limit a sequence of the steps. For example, S301 may be performed before S301, S301 may be performed after S301, or S301 and S301 may be simultaneously performed.

The following describes some terms or concepts in embodiments of this application, to facilitate understanding of a person skilled in the art.
(1) In embodiments of this application, a terminal device is a device having a wireless transceiver function, and may be a fixed device, a mobile device, a handheld device (for example, a mobile phone), a wearable device, a vehicle-mounted device, or a wireless apparatus (for example, a communication module, a modem, or a chip system) built in the foregoing device. The terminal device is configured to connect people, things, machines, and the like, and may be widely used in various scenarios, for example, a terminal device in a scenario, including but not limited to the following scenarios: a sensing scenario, cellular communication, device-to-device (device-to-device, D2D) communication, vehicle to everything (vehicle to everything, V2X), machine-to-machine/machine type communication (machine-to-machine/machine-type communication, M2M/MTC), the internet of things (internet of things, IoT), virtual reality (virtual reality, VR), augmented reality (augmented reality, AR), industrial control (industrial control), self-driving (self-driving), telemedicine (remote medical), smart grid (smart grid), smart furniture, smart office, smart wearable, smart transportation, smart city (smart city), uncrewed aerial vehicle, robot, and indoor commercial scenarios (such as mobile phone projection, file sharing, and video transmission from a mobile phone to VR glasses). The terminal device may also be referred to as a V2X device when used in V2X, for example, a smart car (smart car or intelligent car), a digital car (digital car), an unmanned car (unmanned car, driverless car, pilotless car, or automobile), a self-driving car (self-driving car or autonomous car), a pure electric vehicle (pure EV or Battery EV), a hybrid electric vehicle (hybrid electric vehicle, HEV), a range extended electric vehicle (range extended EV, REEV), a plug-in hybrid electric vehicle (plug-in HEV, PHEV), a new energy vehicle (new energy vehicle), or a road side unit (road site unit, RSU). Alternatively, the terminal device may be a device, for example, an electricity meter or a water meter, in the D2D communication.

In addition, in embodiments of this application, the terminal device may alternatively be a terminal device in an IoT system. An IoT is an important part of future development of information technology, and is mainly technically characterized in that things are connected to networks by using communication technologies, to implement intelligent networks of human-machine interconnection and interconnection between things.

If various terminal devices described above are located in a vehicle (for example, placed in the vehicle or mounted in the vehicle), the terminal devices may be all considered as vehicle-mounted terminal devices. For example, the vehicle-mounted terminal devices are also referred to as on-board units (on-board unit, OBU). The terminal device in this application may alternatively be a vehicle-mounted module, a vehicle-mounted assembly, a vehicle-mounted component, a vehicle-mounted chip, or a vehicle-mounted unit that is built in a vehicle as one or more components or units. The vehicle may use the vehicle-mounted module, the vehicle-mounted assembly, the vehicle-mounted component, the vehicle-mounted chip, or the vehicle-mounted unit that is built in the vehicle, to implement the method in this application.

The terminal device may sometimes be referred to as a UE, a terminal, an access station, a UE station, a remote station, a wireless communication device, a user apparatus, or the like.

In embodiments of this application, a communication apparatus configured to implement a function of the terminal device may be a terminal device, or may be an apparatus that can support the terminal device in implementing the function, for example, a chip system. The apparatus may be installed in the terminal device. In the technical solutions provided in embodiments of this application, the technical solutions provided in embodiments of this application are described by using an example in which the apparatus configured to implement the function of the terminal device is the terminal device. In addition, for ease of description, an example in which the terminal device is a UE is used for description in embodiments of this application.

(2) A network device in embodiments of this application includes, for example, an access network device and/or a core network device. The access network device is a device having a wireless transceiver function, and is configured to communicate with the terminal device. The access network device includes, but is not limited to, a base station (base transceiver station (base transceiver station, BTS)), NodeB, (eNodeB/eNB, or gNodeB/gNB), a transmission reception point (transmission reception point, TRP), a base station evolved from the 3rd Generation Partnership Project (3rd Generation Partnership Project, 3GPP), an access node in a wireless fidelity (wireless fidelity, Wi-Fi) system, a wireless relay node, a wireless backhaul node, and the like. The base station may be a macro base station, a micro base station, a picocell base station, a small cell, a relay station, or the like. A plurality of base stations may support networks using a same access technology, or may support networks using different access technologies. The base station may include one or more co-site or non-co-site transmission reception points. Alternatively, the access network device may be a radio controller in a cloud radio access network (cloud radio access network, CRAN) scenario, a central unit (central unit, CU), and/or a distributed unit (distributed unit, DU). Alternatively, the access network device may be a server or the like. For example, a network device in a vehicle-to-everything (vehicle-to-everything, V2X) technology may be a road side unit (road side unit, RSU). The following provides descriptions by using an example in which the access network device is the base station. The base station may communicate with the terminal device, or may communicate with the terminal device through a relay station. The terminal device may communicate with the plurality of base stations in different access technologies. The core network device is configured to implement functions such as mobility management, data processing, session management, and policy and charging. Names of devices that implement core network functions in systems of different access technologies may be different. This is not limited in embodiments this application. A 5th generation (5th generation, 5G) mobile communication system is used as an example. The core network device includes an AMF, a session management function (session management function, SMF), a policy control function (policy control function, PCF), a user plane function (user plane function, UPF), or the like.

In a CU-DU architecture, the access network device may include one or more of logical network elements such as a central unit (central unit, CU), a distributed unit (distributed unit, DU), a CU-control plane (control plane, CP), a CU-user plane (user plane, UP), or a radio unit (radio unit, RU). The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may alternatively have different names, but a person skilled in the art may understand meanings thereof. For example, in an open radio access network (open radio access network, ORAN) system, the CU may also be referred to as an open (open, O)-CU, the DU may also be referred to as an O-DU, the CU-CP may also be referred to as an O-CU-CP, the CU-UP may also be referred to as an O-CU-UP, and the RU may also be referred to as an O-RU. For ease of description, in embodiments of this application, the CU, the CU-CP, the CU-UP, the DU, and the RU are used as examples for description. In embodiments of this application, any unit in the CU (or the CU-CP or the CU-UP), the DU, and the RU may be implemented by a software module, a hardware module, or a combination of a software module and a hardware module.

In embodiments of this application, a communication apparatus configured to implement a function of the network device may be a network device, or may be an apparatus that can support the network device in implementing the function, for example, a chip system. The apparatus may be installed in the network device. In the technical solutions provided in embodiments of this application, the technical solutions provided in embodiments of this application are described by using an example in which the apparatus configured to implement the function of the network device is the network device.

Computational power refers to a capability of a computer or another device for performing some operations, usually measured by a speed of floating-point operations (usually in the unit of floating-point operations per second (floating-point operations per second, FLOPS)). Higher computational power indicates that the computer or the another device can process more data at a faster processing speed, and also indicates that the computer or the another device has a stronger capability of completing a complex compute task. A computing resource may be understood as a resource for implementing computational power. A processing delay of a compute node (for example, a service server) can be reduced by increasing a computing resource of the compute node.

A central processing unit (central processing unit, CPU) is an important component in a computer system, and is configured to execute various instructions and control an operation of the computer. The CPU is located on a main board of the computer, which is one of the most important components of the computer and undertakes a large number of operation and compute tasks. Generally, the CPU is suitable for executing general-purpose compute tasks. Currently, a peak floating-point operation of a desktop-level CPU is typically on the order of about hundreds of giga floating-point operations per second (giga floating-point operations per second, GFLOPS), and a high-end server-class CPU can achieve a performance level on the order of tera floating-point operations per second (tera floating-point operations per second, TFLOPS).

A graphics processing unit (graphics processing unit, GPU) is a processor dedicated to efficiently processing images and graphics. The GPU is a processor in the computer system, can perform parallel computing, and is applicable to large-scale parallel processing tasks. Currently, GPUs have been widely used in fields such as scientific computing, computer vision, deep learning, and graphics rendering. Compared with the CPU, the GPU has more cores and higher memory bandwidth, and can process a large amount of data in short time. Currently, a peak floating-point operation of high-end GPUs has exceeded 10 TFLOPS and even reaches dozens of TFLOPS, making it an ideal choice for training deep learning models. For example, in terms of artificial intelligence (artificial intelligence, AI) task inference, GPU-based inference performance is better than CPU-based inference performance. For a same AI inference task, inference time required by GPU-based inference is shorter than that required by CPU-based inference.

A neural processing unit (neural processing unit, NPU) is a chip for deep learning computing. The NPU is one of the popular technologies in the AI field in recent years, and is widely used in various AI applications, such as autonomous driving, facial recognition, and intelligent voice.

The CPU, the GPU, the NPU, and the like described above may be used as computing resources. In addition, another hardware resource and/or software resource in the service server may also be used as a computing resource. This is not limited.

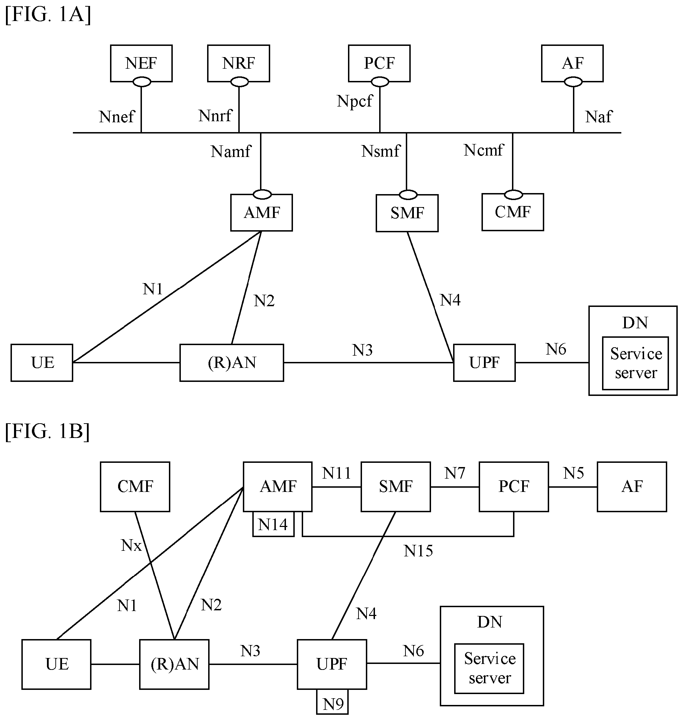

FIG. 1A is a diagram of a 5G network architecture based on a service-based architecture. The network architecture is also a network architecture to which embodiments of this application are applied. The 5G network architecture shown in FIG. 1A may include three parts: UE, a data network (data network, DN), and an operator network.

The operator network may include one or more of the following network elements: a network exposure function (network exposure function, NEF) network element, a policy control function (policy control function, PCF) network element, a unified data repository (unified data repository, UDR), a network repository function (network repository function, NRF) network element, an application function (application function, AF) network element, a CMF network element, an access and mobility management function (access and mobility management function, AMF) network element, an SMF network element, a (radio) access network ((radio) access network, (R)AN), a user plane function (user plane function, UPF) network element, or the like.

The operator network includes the radio access network and a core network. The UE accesses the core network through the (R)AN, and the core network includes a user plane network element and a control plane network element. The user plane network element of the core network includes the UPF, and the control plane network element of the core network includes at least one of the AUSF, the AMF, the SMF, an NSSF, the NEF, the NRF, the UDM, the PCF, the AF, or the like.

The user plane network element (for example, the UPF) is mainly responsible for packet forwarding, quality of service (quality of service, QoS) control, charging information statistics collection, and the like. The control plane network element is mainly responsible for service procedure interaction, and delivering a data packet forwarding policy, a QoS control policy, and the like to a user plane. In embodiments of this application, it is considered that a device like a sensor may access the core network through a device like the UE, and the (R)AN, so that a controller connected to a device like the sensor in industrial Ethernet can perform industrial data communication on the user plane through the UPF.

A control plane of the core network may use the service-based architecture, to be specific, a point-to-point communication mode in a conventional architecture is replaced with a service invoking mode for interaction between control plane network elements. In the service-based architecture, a control plane network element exposes a service to another control plane network element for invoking by the another control plane network element. In point-to-point communication, a set of specific messages exist in a communication interface between control plane network elements, and can be used only by control plane network elements at two sides of the interface during communication.

Functions of the network elements in the core network are described as follows:
The UPF supports all or a part of the following functions: interconnection between a protocol data unit (protocol data unit, PDU) session and a data network, packet routing and forwarding (for example, supporting uplink classification (uplink classification) on traffic and forwarding the traffic to a data network, and supporting a branching point (branching point) to support a multi-homed (multi-homed) PDU session), or data packet detection.
The AMF performs access management and mobility management on the UE, and is responsible for status maintenance of the UE, reachability management of the UE, forwarding of a non-mobility management (mobility management, MM) non-access-stratum (non-access-stratum, NAS) message, and forwarding of a session management (session management, SM) N2 message.
The SMF performs session management on the UE, and allocates and releases a resource for a session of the UE. The resource includes session quality of service (quality of service, QoS), a session path, a forwarding rule, and the like. The SMF is responsible for selecting or reselecting a UPF, allocating an Internet protocol (Internet protocol, IP) address, and further responsible for bearer establishment, modification, release, and the like.
The NEF exposes a network function to a third party through a northbound application programming interface (application programming interface, API).
The NRF stores and selects network function entity information for another network element.
The PCF performs user policy management, and is configured to generate and manage users, sessions, and QoS flow handling policies.

AF, namely, application management: provides an application layer service for the UE. When providing the service for the UE, the AF has requirements for QoS (policy (policy)) and charging (charging) policies and needs to notify the network. In addition, the AF also needs a core network to feed back application-related information.

Related interfaces between the network element functions in embodiments of this application include:
N1: is an interface between the UE and the control plane of the core network.
N2: is a communication interface between the (R)AN and the control plane of the core network.
N3: is a communication interface between the (R)AN and the UPF, and is configured to transmit user plane data.
N4: is a communication interface between the SMF and the UPF, and is used by the SMF to perform policy configuration and the like on the UPF.
N6: is a communication port between the UPF and the DN.

FIG. 1B is a diagram of a 5G network architecture based on a point-to-point interface. The network architecture is another network architecture to which embodiments of this application are applied. For network elements in FIG. 1B, refer to the descriptions of related network elements in FIG. 1A. A main difference between FIG. 1B and FIG. 1A lies in that an interface between the network elements in FIG. 1B is a point-to-point interface instead of a service-based interface.

In FIG. 1B, for example, the CMF is an independent network element. Alternatively, in another implementation, the CMF may be disposed together with an existing network element, for example, may be disposed together with a network element like the SMF or the AMF. In addition, in FIG. 1A or FIG. 1B, a location of the CMF and a communication connection relationship between the CMF and another network element are merely examples. For example, in addition to a direct communication connection to the (R)AN, the CMF may further have a direct communication connection or an indirect communication connection to another network element, for example, may have a direct communication connection or an indirect communication connection to one or more network elements of the UPF, the AMF, the SMF, or the PCF. Alternatively, there may be no direct communication connection between the CMF and the (R)AN, but forwarding needs to be performed through another network element (like the AMF). A location of the CMF in a network, a communication connection relationship, and the like are not limited in embodiments of this application.

The following describes a method provided in embodiments of this application with reference to the accompanying drawings. In embodiments of this specification, the "compute task" may be understood as a business or a service. In embodiments of this specification, the "service server" may be configured to process a compute task, and may be, for example, a server that provides a compute task. For example, the service server is a server located on an edge computing technology (mobile edge computing, MEC) platform, or may be another server. In embodiments of this specification, the CMF is, for example, a newly added network element (not shown in FIG. 1A and FIG. 1B) in the network, is responsible for selecting or reselecting a compute node, and the like, and may be further responsible for determining a computing resource that should be provided by the compute node; the CMF may be an SMF, an AMF, or an access network element to which a computational power management function is added; the CMF may be a module in the SMF, the AMF, or the access network element; or the CMF may have one or more functions of the SMF, the AMF, and the access network element.

Embodiments of this specification may be applied to the network architecture shown in FIG. 1A or FIG. 1B. For example, a compute node (for example, a first compute node or a second compute node) described in embodiments of this specification may be the UPF in FIG. 1A or FIG. 1B, may be the service server not shown in FIG. 1A and FIG. 1B, or may be the access network element in FIG. 1A or FIG. 1B, for example, the (R)AN. A third core network element described in embodiments of this specification may be the CMF not shown in FIG. 1A and FIG. 1B. The following uses the CMF as an example for description. In other words, the "CMF" in the following may be replaced with the "third core network element". A second core network element described in embodiments of this specification may be the PCF or the NEF in FIG. 1A or FIG. 1B. The following uses the PCF or the NEF as an example for description. In other words, the "PCF" or "NEF" in the following may be replaced with the "second core network element". A first core network element described in embodiments of this specification may be the NRF in FIG. 1A or FIG. 1B. The following uses the NRF as an example for description. In other words, the "NRF" in the following may be replaced with the "first core network element". An application function network element described in embodiments of this specification is, for example, the AF in FIG. 1A or FIG. 1B. The following uses the "AF" as an example for description. In other words, the "AF" in the following may be replaced with the "application function network element". A storage network element (where a database network element is used as an example below) described in embodiments of this specification is not shown in FIG. 1A and FIG. 1B. Optionally, the storage network element is, for example, a newly added network element in the core network, or may be implemented through the UDR. In the accompanying drawings corresponding to embodiments of this application, all steps represented by dashed lines are optional steps.

An embodiment of this application provides a first communication method. FIG. 2A is a flowchart of the method.

S201: A CMF determines a first computing resource based on a delay threshold of a first compute task and a first delay.

The delay threshold of the first compute task may be determined based on an end-to-end delay requirement of the first compute task, or the delay threshold may be related to the end-to-end delay requirement. The end-to-end delay requirement of the first compute task is an end-to-end delay between UE and a compute node on a premise that user experience is met. For example, the end-to-end delay requirement is an end-to-end delay requirement for the first compute task. During transmission of a packet of the first compute task, a network may provide good user experience when the end-to-end delay of the first compute task meets the end-to-end delay requirement of the first compute task (for example, the end-to-end delay of the first compute task is less than or equal to the end-to-end delay requirement of the first compute task). Optionally, user experience may be reflected based on a mean opinion score (mean opinion score, MOS). For example, MOS=5 indicates excellent user experience; MOS=4 indicates good user experience, that is, frame freezing of a service can be felt by a user, but has little impact on service experience; MOS=3 indicates that user experience is fair, and in this case, service experience of the user is affected; MOS=2 indicates poor user experience; and MOS=1 indicates extremely poor user experience. For example, if the end-to-end delay requirement of the first compute task is 20 milliseconds (ms), a sum of a transmission delay of the network for the packet corresponding to the first compute task and a processing delay of the compute node for the first compute task may be less than or equal to 20 ms. This helps ensure that user experience is maintained at MOS=4 or MOS=5.

Optionally, the delay threshold of the first compute task may be less than the end-to-end delay requirement of the first compute task, or may be equal to the end-to-end delay requirement of the first compute task. That the delay threshold is equal to the end-to-end delay requirement of the first compute task may also be understood as that the delay threshold of the first compute task is the end-to-end delay requirement of the first compute task. For example, if the end-to-end delay requirement of the first compute task is 20 ms, the delay threshold of the first compute task may be less than or equal to 20 ms.

The compute node may be configured to process the first compute task. In this case, the compute node may be a general reference, and does not refer to a specific compute node configured to process the first compute task. That is, it may be understood as that the end-to-end delay requirement of the first compute task refers to an end-to-end delay between the UE and the compute node, and is regardless of which network element the compute node is. The end-to-end delay requirement may alternatively be expressed as an end-to-end delay requirement indicator, which may be specifically a value or a value range. The end-to-end delay of the first compute task is a sum of a delay for transmitting the packet corresponding to the first compute task between the UE and the compute node and a delay of processing the packet corresponding to the first compute task. It may be understood as that the end-to-end delay of the first compute task includes a transmission delay and a processing delay, where the transmission delay includes the delay for transmitting the packet corresponding to the first compute task between the UE and the compute node; and the processing delay includes, for example, a delay of processing the packet corresponding to the first compute task between compute nodes. The compute node may be implemented in a plurality of manners, and therefore, compute nodes corresponding to the end-to-end delay are also different. For example, if the compute node is a UPF, the end-to-end delay may be a delay for transmitting and processing the packet corresponding to the first compute task between the UE and the UPF; if the compute node is a service server (where the service server may also be referred to as an application server in embodiments of this specification), the end-to-end delay may be a delay for transmitting and processing the packet corresponding to the first compute task between the UE and the service server; or if the compute node is an access network element, the end-to-end delay may be a delay for transmitting and processing the packet corresponding to the first compute task between the UE and the access network element.

As described above, the end-to-end delay of the first compute task includes a transmission delay between the UE and the compute node that processes the first compute task. The transmission delay includes a transmission delay between the UE and the access network element. In addition, if the compute node is not an access network element, the transmission delay further includes a transmission delay between the access network element and the compute node. For this, refer to FIG. 2B. In FIG. 2B, the transmission delay between the access network element and the compute node is referred to as a transmission delay a. For example, the delay threshold of the first compute task minus the transmission delay a and the first delay is the processing delay of the compute node for the first compute task. If the access network element is a compute node, the transmission delay may be the first delay. For this, refer to FIG. 2C. For example, the delay threshold of the first compute task minus the first delay is the processing delay of the compute node for the first compute task. A transmission delay (which may include an uplink transmission delay and a downlink transmission delay) of transmitting the packet corresponding to the first compute task between the UE and the access network element is the first delay. The first delay may also be referred to as an air interface delay, an air interface transmission delay, or the like.

The first computing resource is a computing resource needed by the compute node to process the first compute task. In other words, it may be determined, based on the delay threshold and the first delay, that the compute node needs to provide the first computing resource to process the first compute task, so that transmission and processing of the first compute task meet the delay threshold. Therefore, the CMF determines the first computing resource based on the delay threshold of the first compute task and the first delay. For example, a determining manner includes: The CMF may determine, based on the delay threshold of the first compute task and the first delay, the processing delay of the compute node for the first compute task (for example, if the access network element is a compute node, the processing delay may be obtained by subtracting the first delay from the delay threshold; or if the access network element is not a compute node, the processing delay may be obtained by subtracting, from the delay threshold, the first delay and the delay between the access network element and the compute node); and determine the first computing resource based on the processing delay. The first computing resource includes, for example, one or more of a CPU resource, a GPU resource, or an NPU resource of a compute node, or includes another type of resource. This is not specifically limited.

In this embodiment of this application, it is assumed that the transmission delay between the access network element and the compute node may be a fixed value. For example, a deterministic transmission mechanism may be used between the access network element and the compute node (for example, a UPF or a service server) to ensure that the transmission delay basically remains unchanged, and may be considered as a known value. A sum of the first delay and the known value is the transmission delay between the UE and the compute node that processes the first compute task, for example, a transmission delay b. The delay threshold of the first compute task minus the transmission delay b is the processing delay of the compute node for the first compute task. A quantity of computing resources that need to be provided by the compute node can be determined based on the processing delay. Alternatively, it is understood as that the compute node provides the first computing resource to process the first compute task, so that the end-to-end delay of the first compute task meets the delay threshold, for example, the end-to-end delay of the first compute task is less than or equal to the delay threshold. The delay threshold is determined based on a theoretical end-to-end delay of the first compute task. This means that an actual end-to-end delay of the first compute task can meet the theoretical end-to-end delay, that is, transmission and processing of the first compute task can meet the delay requirement of the first compute task, so that transmission and processing efficiency of the first compute task can be ensured as much as possible, thereby improving user experience.

S202: The CMF sends a first request.

The first request may trigger the first compute node to process the first compute task by using the first computing resource. For example, the first request includes information about the first computing resource. A compute node processes a compute task by using a computing resource, and the processing process may also be considered as a computational process. The first request may finally arrive at the first compute node, or content (for example, the information about the first computing resource) included in the first request may arrive at the first compute node. The first request may be sent by the CMF to the first compute node without being forwarded by another network element. Alternatively, the CMF may send the first request to another network element, and then the another network element sends the information about the first computing resource to the first compute node. The another network element may transparently transmit the first request. Alternatively, the another network element may parse the first request, and then send the information about the first computing resource in the first request to the first compute node. After receiving the first request or the content (for example, the information about the first computing resource) included in the first request, the first compute node may provide the first computing resource to process the first compute task.

The first compute node is, for example, a compute node configured to process the first compute task. The first compute node is not a general reference, but a specific compute node configured to process the first compute task. For example, the first compute node is a compute node selected through the CMF, and the first compute node is, for example, a compute node that can provide the first computing resource. For example, after determining the first computing resource, the CMF may select a compute node that can provide the first computing resource, for example, select the first compute node. The CMF may directly send the first request to the first compute node, or may send the first request to the first compute node through another network element. In FIG. 2A, for example, the first request arrives at the first compute node. The first compute node may directly receive the first request from the CMF, or receive the first request from the CMF through another network element.

In this embodiment of this application, the first computing resource may be determined based on the delay threshold of the first compute task and the first delay, which is equivalent to determining, based on the end-to-end delay and the transmission delay of the first compute task, a computing resource (the first computing resource) that the compute node should provide for the first compute task. The first compute node processes the first compute task based on the first computing resource. In this case, the sum of the processing delay of the first compute node and the packet transmission delay (namely, the actual end-to-end delay) can meet the end-to-end delay requirement of the first compute task, to improve access efficiency of the first compute task and improve user experience.

As described above, the compute node in this specification may be implemented in a plurality of manners. As the compute node varies, an implementation procedure may also change during specific execution. In view of this, the solution provided in the embodiment shown in FIG. 2A is described below by using a plurality of method embodiments. It may be understood that the following method embodiments are different implementations of the embodiment shown in FIG. 2A.

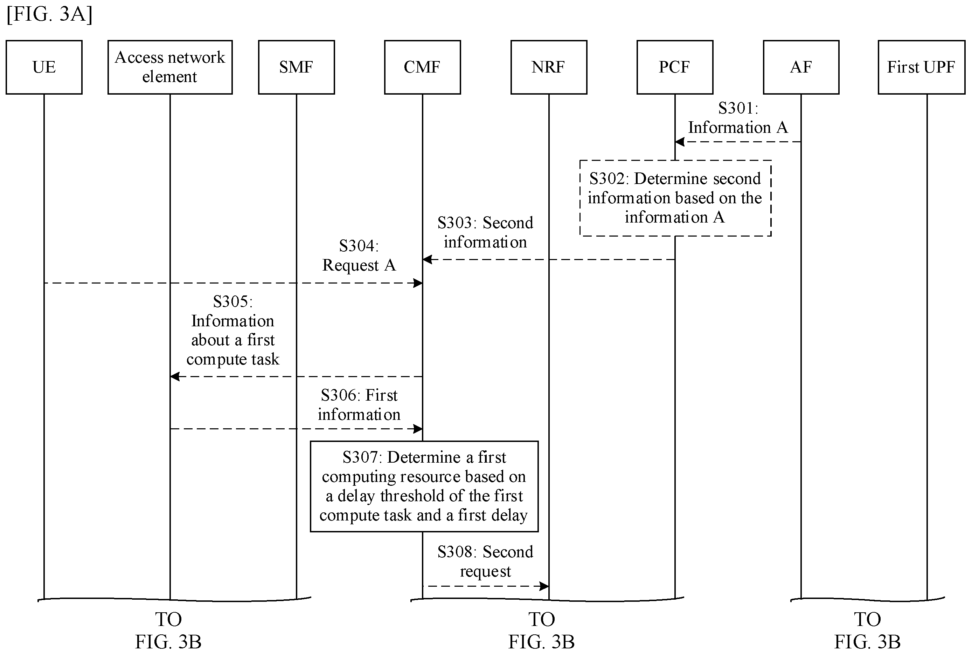

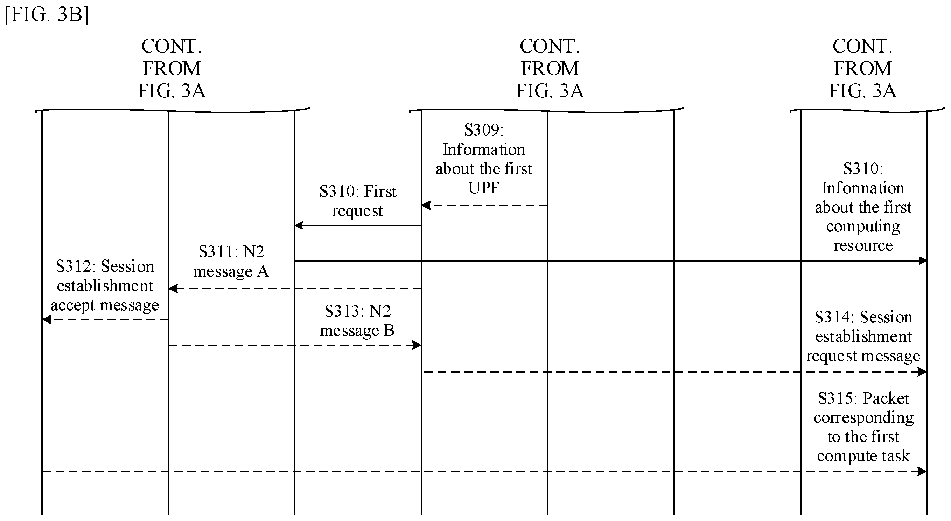

An embodiment of this application provides a second communication method. FIG. 3A and FIG. 3B are a flowchart of the method. In the method, for example, the compute node is a UPF.

S301: An AF sends information A. Correspondingly, a PCF receives the information A.

The information A includes, for example, information about a first correspondence, and the information about the first correspondence is, for example, information about a correspondence between a data network name (data network name, DNN) and/or single network slice selection assistance information (single network slice selection assistance information, S-NSSAI) and information about a first compute task. Alternatively, the information A may include information about a first correspondence and an end-to-end delay requirement of the first compute task. The "correspondence" in this specification may also be referred to as a mapping relationship, an association relationship, or the like. Optionally, the information A may include information about at least one correspondence and an end-to-end delay requirement of at least one compute task. Information about one correspondence represents a correspondence between a DNN and/or S-NSSAI and information about one compute task. The at least one compute task is, for example, a compute task related to the information about the at least one correspondence. The at least one compute task may be all or a part of compute tasks supported by the AF. The at least one compute task includes the first compute task, where different compute tasks correspond to a same DNN or different DNNs, and different compute tasks correspond to same S-NSSAI or different S-NSSAI. For the end-to-end delay requirement, refer to the descriptions of the embodiment shown in FIG. 2A.

There may be several cases for how the information A includes the foregoing content.

Case 1: The information A includes the information about the correspondence between the DNN and/or S-NSSAI and the information about the first compute task. The information about the first compute task may indicate the end-to-end delay requirement of the first compute task.

Case 2: The information A includes the information about the correspondence between the DNN and/or S-NSSAI and the information about the first compute task, and includes the end-to-end delay requirement of the first compute task. In this case, the information about the first compute task does not include the end-to-end delay requirement of the first compute task.

In this specification, Case 2 is mainly used as an example.

The information about the compute task is implemented, for example, in a form of a service model. A service model of a compute task may include one or more of the following information: a maximum uplink data amount corresponding to the compute task, a maximum downlink data amount corresponding to the compute task, or an execution periodicity of the compute task. For example, the information about the first compute task is implemented in a form of a service model. The service model may include one or more of the following information: a maximum uplink data amount corresponding to the first compute task, a maximum downlink data amount corresponding to the first compute task, or an execution periodicity of the first compute task.

Alternatively, the information about the compute task may not be implemented in a form of a service model, and may be implemented, for example, in a form of a list. The list may include one or more of the following information: a maximum uplink data amount corresponding to the compute task, a maximum downlink data amount corresponding to the compute task, or an execution periodicity of the compute task. Alternatively, the information about the compute task may be implemented in another manner. This is not limited herein.

For example, the AF sends the information A to an NEF, and then the NEF sends the information A to the PCF. For example, the NEF may transparently transmit the information A to the PCF.

S302: The PCF determines second information based on the information A. For example, the second information may also be referred to as policy information, or may have another name.

The second information may include (or indicate) the information about the at least one correspondence. The information about at least one correspondence is used for one or more protocol data unit (protocol data unit, PDU) sessions (session). For example, a compute task corresponding to the at least one correspondence is transmitted in the one or more PDU sessions. In addition, the second information may further include an end-to-end delay requirement of the compute task corresponding to the at least one correspondence. For example, information about one correspondence included in the second information is information about a correspondence between the DNN and/or S-NSSAI and the information about the first compute task, and the second information may further include (or indicate) the end-to-end delay requirement of the first compute task.

Optionally, the PCF may determine a policy and charging control (policy and charging control, PCC) rule (rule) based on the information A. The PCC rule may include (or indicate) the information about the correspondence between the DNN and/or S-NSSAI and the information about the first compute task, and include (or indicate) the end-to-end delay requirement of the first compute task. The PCC rule may include the second information.

For example, there may be one or more PCC rules, and each PCC rule may correspond to one PDU session. In this case, the second information (for example, including the information about the at least one correspondence) may be included in the one or more PCC rules, and one PCC rule may include information about all or some correspondences in the second information. For example, one of the one or more PCC rules may include (or indicate) information of K correspondences in the information about the at least one correspondence. The information about the K correspondences is used for a PDU session corresponding to the PCC rule. For example, a compute task corresponding to the K correspondences is transmitted in the PDU session, where K is a positive integer. In addition, the PCC rule may further include an end-to-end delay requirement of the compute task corresponding to the K correspondences. For example, a first PCC rule in the one or more PCC rules includes (or indicates) the information about the correspondence between the DNN and/or S-NSSAI and the information about the first compute task, and includes (or indicates) the end-to-end delay requirement of the first compute task.

S303: The PCF sends the second information to a CMF. Correspondingly, the CMF receives the second information from the PCF.

Optionally, the CMF may send a request to the PCF to request information about a compute task, request a PCC rule, or request information about a correspondence between a DNN and/or S-NSSAI and information about a compute task. The PCF may send the second information to the CMF based on the request. In this manner, the PCF may send the second information to the CMF when the CMF has a demand, to reduce transmission of redundant information. Alternatively, the CMF may subscribe to, from the PCF, information about a compute task, a PCC rule, or information about a correspondence between a DNN and/or S-NSSAI and information about a compute task. After obtaining the second information based on the subscription of the CMF, the PCF may send the second information to the CMF. Through the subscription, the CMF only needs to send a subscription message, and does not need to send a request a plurality of times (for example, in a case of no subscription, the CMF may separately send a request for different compute tasks), so that signaling overheads can be reduced. Alternatively, the PCF may actively send the second information to the CMF. For example, after obtaining the second information, the PCF may send the second information to the CMF, and the CMF does not need to send a request or perform subscription. This can reduce signaling overheads.

Alternatively, a storage network element may be disposed. For example, the storage network element is a database network element, and the database network element is used as an example in embodiments of this specification. Information about at least one correspondence and an end-to-end delay requirement of at least one compute task may be stored in the database network element. For example, the AF may store the information about the at least one correspondence and the end-to-end delay requirement of the at least one compute task in the database network element. For descriptions of the information about the at least one correspondence and the at least one compute task, refer to the foregoing descriptions. If a database network element is disposed, the CMF may send a third request to the database network element, to request information about a corresponding compute task, an end-to-end delay requirement of the compute task, and the like. The database network element may send the information about the corresponding compute task, the end-to-end delay requirement of the compute task, and the like to the CMF based on the third request. In this case, S301 to S303 may not be performed, and therefore S301 to S303 are optional.

S304: UE sends a request A to the CMF. Correspondingly, the CMF receives the request A from the UE.

The request A is, for example, a session establishment request (session establishment request) message, and may be used to request to establish a PDU session. This means that the UE initiates a session establishment procedure. Alternatively, the request A may be another message. This is not specifically limited. The request A includes, for example, a DNN and/or S-NSSAI corresponding to the PDU session. Optionally, if the request A is a session establishment request message, the request A may further include an identifier (PDU session ID) of a PDU session that is requested to be established.

Optionally, the UE may send the request A to an AMF through an access network element. After receiving the request A, the AMF may select an SMF based on the DNN and/or S-NSSAI included in the request A, and send the request A to the selected SMF. After receiving the request A, the SMF may select a CMF based on the DNN and/or S-NSSAI included in the request A, and send the request A to the CMF.

Alternatively, the UE may send the request A to an AMF through an access network element. After receiving the request A, the AMF may select a CMF based on the DNN and/or S-NSSAI included in the request A, and send the request A to the CMF.

Alternatively, the UE may directly send the request A to a CMF through an access network element.

A manner in which the UE sends the request A to the CMF is not limited in this embodiment of this application.

S305: The CMF sends the information about the first compute task to the access network element.

After receiving the request A, the CMF may determine, from the second information based on the DNN and/or S-NSSAI included in the request A, correspondence information including the DNN and/or S-NSSAI (where the correspondence information is, for example, information about a correspondence between the DNN and/or S-NSSAI and a compute task). For example, the CMF may determine information about M correspondences, where M is a positive integer. Information about each correspondence in the information about the M correspondences, is a correspondence between the DNN and/or S-NSSAI and information about a compute task, where compute tasks in information about different correspondences are different. The first compute task is, for example, any one of M compute tasks corresponding to the information about the M correspondences. The CMF may process the M compute tasks in a similar manner. In this embodiment of this application, the first compute task is used as an example for description.

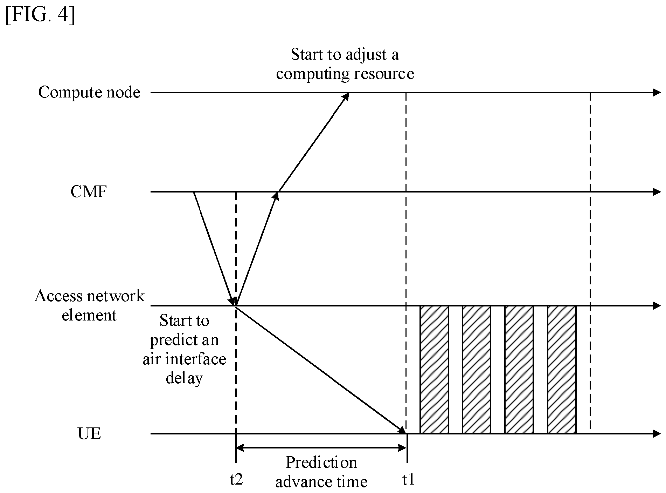

The CMF sends the information about the first compute task to the access network element, so that the access network element predicts (or determines) an air interface transmission delay of the first compute task based on the information about the first compute task, that is, predicts a first delay. For example, the access network element may predict the first delay based on factors such as quality of a channel between the UE and the access network element and the information about the first compute task. Optionally, the CMF may further send first time information to the access network element. The first time information may also be referred to as prediction time information, or may have another name. The name is not limited in this specification. The first time information may indicate time at which the access network element determines the first delay, or indicate time at which the access network element starts to determine the first delay. For example, FIG. 4 is a diagram in which an access network element predicts an air interface delay, where a horizontal axis represents time. In FIG. 4, the UE starts to execute a compute task 1 at a moment t1 (where the compute task 1 is shown by a diagonal rectangle in FIG. 4, and in this example, the compute task 1 is a periodic service). If the access network element starts to predict an air interface delay at the moment t1 or after the moment t1, the predicted air interface delay is sent to the CMF, and the CMF determines a computing resource based on the predicted air interface delay and indicates a compute node to provide the computing resource. In this case, when the compute node adjusts the computing resource to a computing resource suitable for the compute task 1, the compute task 1 may have been executed for a period of time, or even may have been executed. It can be learned that because time at which the access network element performs prediction is too late, the computing resource of the compute task 1 is not adjusted in a timely manner, causing insufficient computing resources of the compute task 1, and other problems. Therefore, in this embodiment of this application, the access network element may predict the air interface delay of the compute task 1 before the compute task 1 starts. For example, the access network element starts to predict the air interface delay of the compute task 1 at a moment t2 shown in FIG. 4, where the moment t2 is earlier than the moment t1, and the moment t2 (or a time difference between the moment t2 and the moment t1) may be determined based on the first time information. The access network element sends the predicted air interface delay to the CMF. The CMF determines a computing resource based on the predicted air interface delay and indicates a compute node to provide the computing resource. When the compute node adjusts the computing resource to a computing resource suitable for the compute task 1 and a current network status, the compute task 1 may not be executed (used as an example in FIG. 4) or start to be executed. Therefore, when the compute task 1 is executed, the compute node provides the computing resource suitable for the compute task 1 and the current network status, so that an end-to-end delay of the compute task 1 can meet a requirement, and processing efficiency of the compute task 1 can be improved.

Optionally, the CMF may further send indication information to the access network element, where the indication information may indicate the access network element to provide a transmission delay for transmitting the packet corresponding to the first compute task between the UE and the access network element. Alternatively, the CMF may not need to send the indication information to the access network element. After receiving the information about the first compute task, the access network element may determine to provide, to the CMF, a transmission delay for transmitting a packet corresponding to the first compute task between the UE and the access network element.

The CMF may send the foregoing information (for example, the information about the first compute task, or the information about the first compute task and the first time information and/or the indication information) to the access network element in different manners. For example, the CMF may send the foregoing information to the SMF, the SMF sends the foregoing information to the AMF, and then the AMF sends the foregoing information to the access network element. Alternatively, the CMF may send the foregoing information to the AMF, and then the AMF sends the foregoing information to the access network element. Alternatively, the foregoing information may be directly sent by the CMF to the access network element without being forwarded by another network element.

S306: The access network element sends first information to the CMF. Correspondingly, the CMF receives the first information from the access network element.

For example, the first information includes (or indicates) the first delay. After receiving the information (for example, the information about the first compute task, or the information about the first compute task and the first time information and/or the indication information) in S305, the access network element may predict a delay for transmitting the first compute task over an air interface, that is, predict a transmission delay of the first compute task between the UE and the access network element. For example, the access network element may predict, based on factors such as the quality of the channel between the UE and the access network element and the information about the first compute task, the delay for transmitting the first compute task over the air interface. If the access network element receives the first time information, the access network element may start to predict the transmission delay of the first compute task between the UE and the access network element at time indicated by the first time information.

Optionally, the access network element may further determine validity duration (or referred to as effective use duration, use duration, or the like) of the first delay. The name is not limited. The validity duration may indicate a validity period of the first delay. For example, the CMF may start timing from reception of the first delay and end timing when first duration is up. Within the first duration, the CMF may determine a computing resource based on the first delay. If the first duration is exceeded, the CMF cannot determine the computing resource based on the first delay. In this case, if a computing resource needs to be determined, for example, the CMF may re-request the access network element to provide a delay for transmitting the first compute task over the air interface. A channel change status may be considered by using the validity duration, so that the computing resource determined by the CMF is more accurate.

Optionally, the first information may include (or indicate) the validity duration of the first delay. For example, if the access network element does not determine the validity duration, the first information includes the first delay and does not include the validity duration; or if the access network element determines the validity duration, the first information may include the first delay and the validity duration.

The access network element may send the first information to the CMF in different manners. For example, the access network element may send the first information to the AMF, the AMF sends the first information to the SMF, and then the SMF sends the first information to the CMF. Alternatively, the access network element may send the first information to the AMF, and then the AMF sends the first information to the CMF. Alternatively, the first information may be directly sent by the access network element to the CMF without being forwarded by another network element.

S307: The CMF determines a first computing resource based on a delay threshold of the first compute task and the first delay.

For example, the CMF may determine the delay threshold of the first compute task based on the second information. Alternatively, if the CMF does not receive the second information, but the database network element stores information about a correspondence between information about a compute task and a DNN and/or S-NSSAI, and stores an end-to-end delay requirement of the compute task, the CMF may request the end-to-end delay requirement of the first compute task from the database network element. For example, the CMF may send a request B to the database network element, where the request B may include a DNN and/or S-NSSAI, and the DNN and/or S-NSSAI are/is, for example, from the request A, or may be determined by the CMF in another manner. After receiving the request B, the database network element may determine a corresponding compute task based on the DNN and/or S-NSSAI. For example, the determined compute task includes the first compute task. The database network element may send an end-to-end delay requirement of the determined compute task to the CMF, so that the CMF obtains the end-to-end delay requirement of the compute task. Optionally, the CMF may request the end-to-end delay requirement of the first compute task from the database network element in S307, or before S307, or after S304. This is not limited herein. Optionally, the database network element may send, to the CMF, the determined end-to-end delay requirement of the compute task, and information about a correspondence between the DNN and/or S-NSSAI and information about the compute task; or the database network element may send, to the CMF, the determined end-to-end delay requirement of the compute task, and information about the compute task corresponding to the DNN and/or S-NSSAI. The CMF may determine the delay threshold of the first compute task based on the end-to-end delay requirement of the first compute task. In addition, the CMF obtains the first delay from the access network element. In this case, the CMF may determine the first computing resource based on the delay threshold of the first compute task and the first delay. Optionally, a delay (for example, referred to as a third delay) between the access network element and a UPF may be known to the CMF. In this case, the CMF may determine the first computing resource based on the delay threshold of the first compute task, the third delay, and the first delay. For example, a processing delay corresponding to the first computing resource is equal to the delay threshold of the first compute task minus the third delay and the first delay.

Alternatively, the CMF may obtain the first delay without relying on the access network element. For example, the CMF may determine the first delay, or may determine the first delay in another manner. For example, the access network element may have sent the first delay to the CMF in advance, or the CMF can learn of information, for example, the quality of the channel between the access network element and the UE, and then the CMF may determine the first delay with reference to the information about the first compute task. Therefore, S305 and S306 are optional.

Alternatively, the CMF may determine the end-to-end delay requirement of the first compute task without relying on the second information or the database network element. For example, the end-to-end delay requirement of the first compute task may be predefined in a protocol, or may be preconfigured in the CMF, or the CMF may obtain the end-to-end delay requirement of the first compute task in another manner. Therefore, from this perspective, it is understood that S301 to S303 are optional.

In addition, the CMF needs to perform S307. A trigger condition is that a request (for example, the request A) from the UE is received. Alternatively, there may be another trigger condition, for example, the CMF may periodically determine the first computing resource and the like corresponding to the first compute task, and does not need to receive the request from the UE. Therefore, S304 is an optional.

S307 may be the same as S201 shown in FIG. 2A. For more implementation details of S307, refer to S201 in the embodiment shown in FIG. 2A.

S308: The CMF sends a second request to an NRF. Correspondingly, the NRF receives the second request.

The second request may be used to request to discover a UPF. In addition, the second request may further include the information about the first computing resource. After receiving the second request, the NRF may determine a UPF based on the information about the first computing resource. For example, in addition to the information about the first computing resource, the second request further includes other information, for example, location information of the UE. In this case, the NRF may determine a UPF based on factors such as the location information of the UE and the information about the first computing resource. For example, the NRF determines a first UPF, where the first UPF may support the first computing resource, or the first UPF can provide the first computing resource.

S309: The NRF sends information about the first UPF to the CMF. Correspondingly, the CMF receives the information about the first UPF.

The information about the first UPF includes, for example, an identifier of the first UPF. The identifier of the first UPF includes, for example, an ID of the first UPF, and/or includes address information of the first UPF, for example, an internet protocol (internet protocol, IP) address of the first UPF.

Optionally, the information about the first UPF may further include information about a maximum computing resource supported by the first UPF.

In S308 and S309, for example, the CMF requests the NRF to discover a UPF. For example, the UPF is registered with the NRF, and the NRF stores registration information of the UPF. Therefore, the CMF can select the UPF. Alternatively, if the UPF is registered with the CMF, or the NRF sends registration information of the UPF to the CMF, or the CMF obtains information about the UPF in another manner, the CMF may select a UPF, and S308 and S309 do not need to be performed. Alternatively, the UPF may have been selected, and does not need to be selected again. In this case, S308 and S309 do not need to be performed. Therefore, S308 and S309 are optional.

S310: The CMF sends a first request to the SMF. Correspondingly, the SMF receives the first request from the CMF.

For example, if the CMF receives the request A from the UE, and the request A is a session establishment request message, the first request is, for example, a session establishment request; or if the request A is another message, or the CMF does not receive the request A from the UE, the first request may be implemented in another manner. The first request includes, for example, the information about the first computing resource and the information about the first UPF. Optionally, if the first request is a session establishment request, the first request may further include an ID of a PDU session that is requested to be established.

After receiving the first request, the SMF may determine the first UPF based on the information about the first UPF, and the SMF may send a request C to the first UPF. The request C is, for example, the first request. For example, the SMF may not process the first request, and transparently transmit the first request to the UPF. Alternatively, the request C is not the first request, but content included in the request C may be determined based on the first request. For example, the SMF may process the first request, and send content (for example, the information about the first computing resource) in the first request to the UPF. For details, refer to S310 in FIG. 3B. The request C may include the information about the first computing resource (used as an example in S310 in FIG. 3B). After receiving the information about the first computing resource, the first UPF may perform processing such as instantiation on the first computing resource, to provide the first computing resource for the first compute task. Optionally, the first UPF may further send a response A to the SMF. Correspondingly, the SMF receives the response A. The response A includes, for example, N3 CN tunnel information allocated by the first UPF.

In addition, optionally, if the request C is a session establishment request message, the first UPF may further allocate N3 core network (core net, CN) tunnel information (tunnel information). The N3 CN tunnel information may be used to transmit a user plane data packet through an N3 interface between the access network element and the first UPF.

S310 may be the same as S202 in the embodiment shown in FIG. 2A.

By performing the foregoing steps, the first UPF can process the first compute task based on the first computing resource. In this case, the sum of the processing delay of the first UPF and the packet transmission delay (namely, the actual end-to-end delay) can meet the end-to-end delay requirement of the first compute task, to improve access efficiency of the first compute task and improve user experience.

Optionally, this embodiment of this application may further include the following S311 to S315. In descriptions of the following steps, an example in which both the first request and the request C are session establishment request messages is mainly used.

S311: The CMF sends an N2 message (N2 message) to the access network element. Correspondingly, the access network element receives the N2 message from the CMF. For example, the N2 message is referred to as an N2 message A.

The N2 message A may include the N3 CN tunnel information allocated by the first UPF, and may further include a response B. The response B is, for example, a session establishment accept (session establishment accept) message to be sent to the UE.

S312: The access network element sends a session establishment accept message to the UE. Correspondingly, the UE receives the session establishment accept message.

S313: The access network element sends the N2 message to the CMF. Correspondingly, the CMF receives the N2 message. For example, the N2 message is referred to as an N2 message B. The N2 message B includes, for example, N3 CN tunnel information allocated by the access network element. The N3 CN tunnel information may be used to transmit a user plane data packet through an N3 interface between the access network element and the first UPF.

S314: The CMF sends a session establishment request message to the first UPF. Correspondingly, the first UPF receives the session establishment request message.

For example, the CMF sends the session establishment request message to the SMF, and then the SMF sends the session establishment request message to the first UPF. The session establishment request message may include the N3 CN tunnel information allocated by the access network element.

In this case, the PDU session establishment procedure of the UE ends, and the PDU session establishment is completed.

S315: The UE sends a packet corresponding to the first compute task. Correspondingly, the first UPF receives the packet. The packet is, for example, a data packet.

The UE may send the packet corresponding to the first compute task in the PDU session. After receiving the packet, the first UPF may process the packet by using the first computing resource. Optionally, the first UPF may further send a processing result of the packet to the UE.

Channel quality of the air interface may change at any time, and accordingly, the air interface delay may also change. In this embodiment of this application, if the air interface delay changes, the CMF may re-determine a computing resource. For example, the access network element may determine, in real time, a transmission delay for transmitting the packet corresponding to the first compute task between the UE and the access network element, or may periodically determine a transmission delay for transmitting the packet corresponding to the first compute task between the UE and the access network element. If the access network element determines that the transmission delay changes, for example, the transmission delay changes from the first delay to a second delay (where the second delay is different from the first delay), the access network element may send the second delay to the CMF. Alternatively, if the access network element determines that the transmission delay changes, for example, the transmission delay changes from the first delay to a second delay, and a difference between the second delay and the first delay is greater than a first threshold, or the second delay is greater than a second threshold, the access network element may send the second delay to the CMF. The first threshold and/or the second threshold may be predefined in a protocol, may be preconfigured in the access network element, or may be set by the access network element. After receiving the second delay, the CMF may determine the computing resource, for example, a second computing resource, based on the delay threshold of the first compute task and the second delay (where optionally, the CMF may determine the second computing resource based on the delay threshold of the first compute task, the second delay, and the third delay). In this case, the CMF may send information about the second computing resource, to trigger the first UPF to process the first compute task by using the second computing resource. This means that the foregoing steps such as S306, S307, and S310 may be repeatedly performed. Alternatively, for example, the CMF learns of the information about the maximum computing resource supported by the first UPF. If the second computing resource is a computing resource that can be provided by the first UPF, the CMF may repeatedly perform S310, to trigger, by sending the information about the second computing resource, the first UPF to process the first compute task by using the second computing resource. Alternatively, if the first UPF cannot provide the second computing resource, for example, the second computing resource is greater than the maximum computing resource supported by the first UPF, the CMF may trigger UPF reselection. This process is described in the next embodiment.

In this embodiment of this application, the CMF may determine the first computing resource based on the delay threshold of the first compute task and the first delay, which is equivalent to determining, based on the end-to-end delay and the transmission delay of the first compute task, a computing resource (the first computing resource) that the compute node should provide for the first compute task. The first UPF processes the first compute task based on the first computing resource. In this case, the sum of the processing delay of the first UPF and the packet transmission delay (namely, the actual end-to-end delay) can meet the end-to-end delay requirement of the first compute task, to improve access efficiency of the first compute task and improve user experience.

As described above, if the first UPF cannot provide the second computing resource, the CMF may trigger UPF reselection. Therefore, an embodiment of this application provides a third communication method, to describe the process. FIG. 5 is a flowchart of the method. In the method, for example, the compute node is a UPF.

Optionally, after the embodiment shown in FIG. 3A and FIG. 3B is performed, the embodiment shown in FIG. 5 may be performed. The embodiment shown in FIG. 5 is an optional embodiment as a whole. Therefore, each step in the embodiment may be considered as an optional step, and is illustrated by a solid line in FIG. 5.

S501: A CMF sends a request D to an NRF. Correspondingly, the NRF receives the request D.

The request D may be used to request to discover a UPF. In addition, the request D may further include information about a second computing resource. After receiving the request D, the NRF may determine a UPF based on the information about the second computing resource. For example, in addition to the information about the second computing resource, the request D further includes other information, for example, location information of UE. In this case, the NRF may determine a UPF based on factors such as the location information of the UE and the information about the second computing resource. For example, the NRF determines a second UPF, where the second UPF may support the second computing resource, or the second UPF can provide the second computing resource.

For example, if the CMF determines that a compute node needs to provide the second computing resource to process a first compute task, and determines that a first UPF cannot provide the second computing resource, S501 may be performed. Optionally, the CMF may determine the second computing resource based on a new delay from an access network element. For example, the access network element may determine, in real time, a transmission delay for transmitting the packet corresponding to the first compute task between the UE and the access network element, or may periodically determine a transmission delay for transmitting the packet corresponding to the first compute task between the UE and the access network element. If the access network element determines that the transmission delay changes, for example, changes from a first delay to a second delay, the access network element may send the second delay to the CMF. After receiving the second delay, the CMF may determine the computing resource based on a delay threshold of the first compute task and the second delay, for example, determine a second computing resource (where optionally, the CMF may determine the second computing resource based on the delay threshold of the first compute task, the second delay, and the third delay; and for the third delay, refer to the embodiment shown in FIG. 3A and FIG. 3B). Alternatively, the CMF may determine the second computing resource in another manner. This is not limited herein.

Optionally, the CMF has learned of information about a maximum computing resource supported by the first UPF. For example, if the CMF learns, by performing S309 in the embodiment shown in FIG. 3A and FIG. 3B, the information about the maximum computing resource supported by the first UPF, the CMF may determine whether the first UPF can provide the second computing resource. For example, if the first UPF cannot provide the second computing resource, for example, the second computing resource is greater than the maximum computing resource supported by the first UPF, the CMF may trigger UPF reselection, for example, perform S501.

S502: The NRF sends information about the second UPF to the CMF. Correspondingly, the CMF receives the information about the second UPF.

The information about the second UPF includes, for example, an identifier of the second UPF. The identifier of the second UPF includes, for example, an ID of the second UPF, and/or includes address information of the second UPF, for example, an IP address of the second UPF.

Optionally, the information about the second UPF may further include information about a maximum computing resource supported by the second UPF.

In S501 and S502, for example, the CMF requests the NRF to discover a UPF. For example, the UPF is registered with the NRF, and the NRF stores registration information of the UPF. Therefore, the CMF can select the UPF. Alternatively, if the UPF is registered with the CMF, or the NRF sends registration information of the UPF to the CMF, or the CMF obtains information about the UPF in another manner (for example, the CMF previously requests the NRF to discover a UPF, and therefore learns of some registration information of the UPF or learns of some information about a maximum computing resource supported by the UPF), the CMF may select a UPF, and S501 and S502 do not need to be performed. Alternatively, the UPF may have been selected, and does not need to be selected again. In this case, S501 and S502 do not need to be performed.

S503: The CMF sends a fourth request to an SMF. Correspondingly, the SMF receives the fourth request from the CMF.

The fourth request is, for example, a session modification request (session modification request) message, and the session modification request message may be used to request to migrate a PDU session to the second UPF. Alternatively, the fourth request may be another message. The fourth request may include the information about the second computing resource and the information about the second UPF. Optionally, the fourth request may further include an ID of the PDU session.

After receiving the fourth request, the SMF may determine the second UPF based on the information about the second UPF, and the SMF may send a request E to the second UPF. The request E is, for example, the fourth request, or may be a request determined based on the fourth request. The request E may further include the information about the second computing resource. After receiving the information about the second computing resource, the second UPF may perform processing such as instantiation on the second computing resource, to provide the second computing resource for the first compute task. Optionally, the second UPF may further send a response C to the SMF. Correspondingly, the SMF receives the response C. The response C includes, for example, N3 CN tunnel information allocated by the second UPF.

In addition, optionally, if the fourth request is a session modification request message, the second UPF may further allocate N3 CN tunnel information. The N3 CN tunnel information may be used to transmit a user plane data packet through an N3 interface between the access network element and the second UPF.

By performing the foregoing steps, the second UPF can process the first compute task based on the second computing resource. In this case, the sum of the processing delay of the second UPF and the packet transmission delay (namely, the actual end-to-end delay) can meet the end-to-end delay requirement of the first compute task, to improve access efficiency of the first compute task and improve user experience.

S504: The CMF sends the N2 message to the access network element. Correspondingly, the access network element receives the N2 message from the CMF. For example, the N2 message is referred to as an N2 message C.

The N2 message C may include the N3 CN tunnel information allocated by the second UPF, and may further include a response D. The response D is, for example, a session modification request message to be sent to the UE.

S505: The access network element sends a session modification request message to the UE. Correspondingly, the UE receives the session modification request message.

S506: The access network element sends the N2 message to the CMF. Correspondingly, the CMF receives the N2 message. For example, the N2 message is referred to as an N2 message D. The N2 message D includes, for example, N3 CN tunnel information allocated by the access network element. The N3 CN tunnel information may be used to transmit a user plane data packet through an N3 interface between the access network element and the second UPF.

S507: The CMF sends a session establishment request message to the second UPF. Correspondingly, the second UPF receives the session establishment request message.

For example, the CMF sends the session establishment request message to the SMF, and then the SMF sends the session establishment request message to the first UPF. The session establishment request message may include the N3 CN tunnel information allocated by the access network element.

The PDU session modification procedure of the UE ends.

S508: The UE sends a packet corresponding to the first compute task. Correspondingly, the second UPF receives the packet. The packet is, for example, a data packet.

The UE may send the packet corresponding to the first compute task in the modified PDU session. After receiving the packet, the second UPF may process the packet by using the second computing resource. Optionally, the second UPF may further send a processing result of the packet to the UE.

In this embodiment of this application, if an air interface delay between the UE and the access network element changes, the CMF may determine the second computing resource based on the delay threshold of the first compute task and a changed delay (the second delay), which is equivalent to still determining, based on the end-to-end delay and the transmission delay of the first compute task, a computing resource (the second computing resource) that the compute node should provide for the first compute task. In addition, if an original compute node (the first UPF) cannot provide a newly determined computing resource, a compute node (the second UPF) may be reselected. The second UPF can process the first compute task based on the second computing resource. In this case, the sum of the processing delay of the second UPF and the packet transmission delay (namely, the actual end-to-end delay) can meet the end-to-end delay requirement of the first compute task, to improve access efficiency of the first compute task and improve user experience.

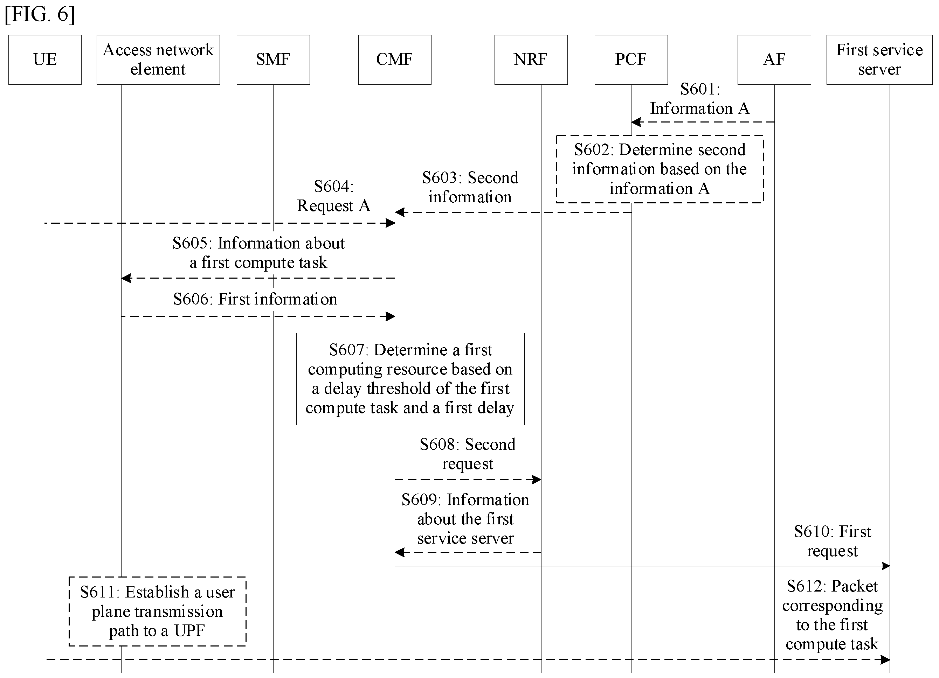

In the embodiment shown in FIG. 3A and FIG. 3B or FIG. 5, for example, the compute node is a UPF. In addition, the compute node may alternatively be a service server. An embodiment of this application provides a fourth communication method. FIG. 6 is a flowchart of the method. In the method, for example, the compute node is a service server.

S601: An AF sends information A. Correspondingly, a PCF receives the information A.

For more content of S601, refer to S301 in the embodiment shown in FIG. 3A.

S602: The PCF determines second information based on the information A.

For more content of S602, refer to S302 in the embodiment shown in FIG. 3A.

S603: The PCF sends the second information to a CMF. Correspondingly, the CMF receives the second information from the PCF.

For more content of S603, refer to S303 in the embodiment shown in FIG. 3A.

S604: UE sends a request A to the CMF. Correspondingly, the CMF receives the request A from the UE.

For more content of S604, refer to S304 in the embodiment shown in FIG. 3A.

S605: The CMF sends the information about the first compute task to the access network element.

For more content of S605, refer to S305 in the embodiment shown in FIG. 3A.

S606: The access network element sends first information to the CMF. Correspondingly, the CMF receives the first information from the access network element.

For more content of S606, refer to S306 in the embodiment shown in FIG. 3A.

S607: A CMF determines a first computing resource based on a delay threshold of a first compute task and a first delay.

Optionally, a delay (for example, referred to as a fourth delay) between the access network element and a service server may be known to the CMF. In this case, the CMF may determine the first computing resource based on the delay threshold of the first compute task, the fourth delay, and the first delay. For example, a processing delay corresponding to the first computing resource is equal to the delay threshold of the first compute task minus the fourth delay and the first delay.

For more content of S607, refer to S307 in the embodiment shown in FIG. 3A.

S608: The CMF sends a second request to an NRF. Correspondingly, the NRF receives the second request.

For more content of S608, refer to S308 in the embodiment shown in FIG. 3A.

S609: The NRF sends information about a first service server to the CMF. Correspondingly, the CMF receives the information about the first service server.

The information about the first service server includes, for example, an identifier of the first service server. The identifier of the first service server includes, for example, an ID of the first service server, and/or includes address information of the first service server, for example, an IP address of the first service server.

Optionally, the information about the first service server may further include information about a maximum computing resource supported by the first service server.

In S608 and S609, for example, the CMF requests the NRF to discover a service server. For example, the service server is registered with the NRF (to be specific, the service server may send registration information to the AF, and the AF then registers the service server with the NRF through the NEF), and the NRF stores the registration information of the service server. Therefore, the CMF can select the service server. Alternatively, if the service server is registered with the CMF, or the NRF sends registration information of the service server to the CMF, or the CMF obtains information about the service server in another manner, the CMF may select a service server, and S608 and S609 do not need to be performed. Alternatively, the service server may have been selected, and does not need to be selected again. In this case, S608 and S609 do not need to be performed. Therefore, S608 and S609 are optional.

S610: The CMF sends a first request to the first service server. Correspondingly, the first service server receives the first request from the CMF.

For example, the CMF may send the first request to the AF, and then the AF sends the first request to the first service server. It is also understood as that the CMF sends the first request to the first service server through the AF.

The first request includes, for example, information about the first computing resource. After receiving the information about the first computing resource, the first service server may perform processing such as instantiation on the first computing resource, to provide the first computing resource for the first compute task. Optionally, the first service server may further send response information to the CMF through the AF.

S610 may be the same as S202 in the embodiment shown in FIG. 2A.

S611: Establish a user plane transmission path between the access network element and the UPF.

For example, the SMF may select a UPF based on the IP address of the first service server. The SMF may establish an N4 session (N4 session) with the selected UPF, and the SMF may send an address of the UPF to the access network element. In this case, the access network element may establish a user plane transmission path to the UPF.

In this case, the PDU session establishment procedure of the UE ends, and the PDU session establishment is completed.

S612: The UE sends a packet corresponding to the first compute task. Correspondingly, the first service server receives the packet. The packet is, for example, a data packet.

The UE may send the packet corresponding to the first compute task in the PDU session. After receiving the packet, the first service server may process the packet by using the first computing resource. Optionally, the first service server may further send a processing result of the packet to the UE.

Channel quality of the air interface may change at any time, and accordingly, the air interface delay may also change. In this embodiment of this application, if the air interface delay changes, the CMF may re-determine a computing resource. For example, the access network element may determine, in real time, a transmission delay for transmitting the packet corresponding to the first compute task between the UE and the access network element, or may periodically determine a transmission delay for transmitting the packet corresponding to the first compute task between the UE and the access network element. If the access network element determines that the transmission delay changes, for example, changes from a first delay to a second delay, the access network element may send the second delay to the CMF. After receiving the second delay, the CMF may determine the computing resource based on the delay threshold of the first compute task and the second delay, for example, determine a second computing resource (where optionally, the CMF may determine the second computing resource based on the delay threshold of the first compute task, the fourth delay, and the second delay). In this case, the CMF may send information about the second computing resource, to trigger the first service server to process the first compute task by using the second computing resource. This means that the foregoing steps such as S606, S607, and S610 may be repeatedly performed. Alternatively, for example, the CMF learns of the information about the maximum computing resource supported by the first service server. If the second computing resource is a computing resource that can be provided by the first service server, the CMF may repeatedly perform S610, to trigger, by sending the information about the second computing resource, the first service server to process the first compute task by using the second computing resource. Alternatively, if the first service server cannot provide the second computing resource, for example, the second computing resource is greater than the maximum computing resource supported by the first service server, the CMF may trigger service server reselection. This process is described in the next embodiment.

In this embodiment of this application, the CMF may determine the first computing resource based on the delay threshold of the first compute task and the first delay, which is equivalent to determining, based on the end-to-end delay and the transmission delay of the first compute task, a computing resource (the first computing resource) that the compute node should provide for the first compute task. The first service server processes the first compute task based on the first computing resource. In this case, the sum of the processing delay of the first service server and the packet transmission delay (namely, the actual end-to-end delay) can meet the end-to-end delay requirement of the first compute task, to improve access efficiency of the first compute task and improve user experience.

As described above, if the first service server cannot provide the second computing resource, the CMF may trigger service server reselection. Therefore, an embodiment of this application provides a fifth communication method, to describe the process. FIG. 7 is a flowchart of the method. In the method, for example, the compute node is a service server.

Optionally, after the embodiment shown in FIG. 6 is performed, the embodiment shown in FIG. 7 may be performed. The embodiment shown in FIG. 7 is an optional embodiment as a whole. Therefore, each step in the embodiment may be considered as an optional step, and is illustrated by a solid line in FIG. 7.

S701: A CMF sends a request D to an NRF. Correspondingly, the NRF receives the request D.

The request D may be used to request to discover a service server. In addition, the request D may further include information about a second computing resource. For more content of S701, refer to S501 in the embodiment shown in FIG. 5. The "UPF" in S501 may be replaced with the "service server".

S702: The NRF sends information about a second service server to the CMF. Correspondingly, the CMF receives the information about the second service server.

The information about the second service server includes, for example, an identifier of the second service server. The identifier of the second service server includes, for example, an ID of the second service server, and/or includes address information of the second service server, for example, an IP address of the second service server.

Optionally, the information about the second service server may further include information about a maximum computing resource supported by the second service server.

In S701 and S702, for example, the CMF requests the NRF to discover a service server. For example, the service server is registered with the NRF, and the NRF stores registration information of the service server. Therefore, the CMF can select a service server. Alternatively, if the service server is registered with the CMF, or the NRF sends registration information of the service server to the CMF, or the CMF obtains information about the service server in another manner, the CMF may select a service server, and S701 and S702 do not need to be performed. Alternatively, the service server may have been selected, and does not need to be selected again. In this case, S701 and S702 do not need to be performed.

S703: The CMF sends a fourth request to the second service server. Correspondingly, the second service server receives the fourth request from the CMF.

For example, the CMF may send the fourth request to the AF, and then the AF sends the fourth request to the second service server. It is also understood as that the CMF sends the fourth request to the second service server through the AF.

The fourth request includes, for example, information about the second computing resource. After receiving the information about the second computing resource, the second service server may perform processing such as instantiation on the second computing resource, to provide the second computing resource for the first compute task. Optionally, the first service server may further send response information to the CMF through the AF.

S704: The CMF sends the IP address of the second service server to an SMF. Correspondingly, the SMF receives the IP address of the second service server.

S705: The SMF selects a UPF based on the IP address of the second service server.

If determining that the service server changes, the SMF may select a new UPF based on the IP address of the second service server. For example, the SMF may send a request to the NRF to discover a new UPF. The SMF may update a user plane transmission path between the access network element and the new UPF based on information about the new UPF.

Then, the UE may send a packet corresponding to the first compute task. Correspondingly, after receiving the packet, the first service server may process the packet by using the second computing resource. Optionally, the second service server may further send a processing result of the packet to the UE. The packet is, for example, a data packet.

In this embodiment of this application, if an air interface delay between the UE and the access network element changes, the CMF may determine the second computing resource based on the delay threshold of the first compute task and a changed delay (the second delay), which is equivalent to still determining, based on the end-to-end delay and the transmission delay of the first compute task, a computing resource (the second computing resource) that the compute node should provide for the first compute task. In addition, if an original compute node (the first service server) cannot provide a newly determined computing resource, a compute node (the second service server) may be reselected. The second service server can process the first compute task based on the second computing resource. In this case, the sum of the processing delay of the second service server and the packet transmission delay (namely, the actual end-to-end delay) can meet the end-to-end delay requirement of the first compute task, to improve access efficiency of the first compute task and improve user experience.

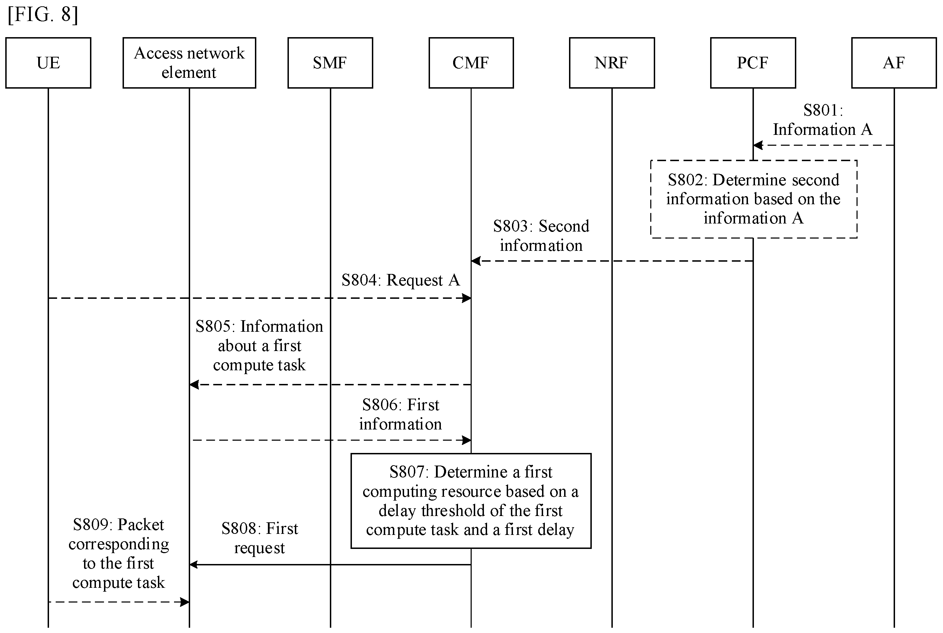

In the foregoing embodiment, for example, the compute node is a UPF or a service server. In addition, the compute node may alternatively be an access network element. An embodiment of this application provides a sixth communication method. FIG. 8 is a flowchart of the method. In the method, for example, the compute node is an access network element.

S801: An AF sends information A. Correspondingly, a PCF receives the information A.

For more content of S801, refer to S301 in the embodiment shown in FIG. 3A.

S802: The PCF determines second information based on the information A.

For more content of S802, refer to S302 in the embodiment shown in FIG. 3A.

S803: The PCF sends the second information to a CMF. Correspondingly, the CMF receives the second information from the PCF.

For more content of S803, refer to S303 in the embodiment shown in FIG. 3A.

S804: UE sends a request A to the CMF. Correspondingly, the CMF receives the request A from the UE.

For more content of S804, refer to S304 in the embodiment shown in FIG. 3A.

S805: The CMF sends the information about the first compute task to the access network element.

For more content of S805, refer to S305 in the embodiment shown in FIG. 3A.

S806: The access network element sends first information to the CMF. Correspondingly, the CMF receives the first information from the access network element.

For more content of S806, refer to S306 in the embodiment shown in FIG. 3A.

S807: A CMF determines a first computing resource based on a delay threshold of a first compute task and a first delay.

For example, a processing delay corresponding to the first computing resource is equal to the delay threshold of the first compute task minus the first delay.

For more content of S807, refer to S307 in the embodiment shown in FIG. 3A.

S808: The CMF sends a first request to the access network element. Correspondingly, the access network element receives the first request from the CMF.

The first request includes, for example, information about the first computing resource. After receiving the information about the first computing resource, the access network element may perform processing such as instantiation on the first computing resource, to provide the first computing resource for the first compute task. Optionally, the access network element may further send response information to the CMF.

The CMF may send the first request to the access network element in different manners. For example, the CMF may send the first request to the SMF, the SMF sends the foregoing information to an AMF, and then the AMF sends the first request to the access network element. Alternatively, the CMF may send the first request to the AMF, and the AMF sends the first request to the access network element. Alternatively, the first request may be directly sent by the CMF to the access network element without being forwarded by another network element.

In this case, the PDU session establishment procedure of the UE ends, and the PDU session establishment is completed.

S809: The UE sends a packet corresponding to the first compute task. Correspondingly, the access network element receives the packet. The packet is, for example, a data packet.

The UE may send the packet corresponding to the first compute task in the PDU session. After receiving the packet, the access network element may process the packet by using the first computing resource. Optionally, the access network element may further send a processing result of the packet to the UE.

Channel quality of the air interface may change at any time, and accordingly, the air interface delay may also change. In this embodiment of this application, if the air interface delay changes, the CMF may re-determine a computing resource. For example, the access network element may determine, in real time, a transmission delay for transmitting the packet corresponding to the first compute task between the UE and the access network element, or may periodically determine a transmission delay for transmitting the packet corresponding to the first compute task between the UE and the access network element. If the access network element determines that the transmission delay changes, for example, changes from a first delay to a second delay, the access network element may send the second delay to the CMF. After receiving the second delay, the CMF may determine the computing resource, for example, a second computing resource, based on the delay threshold of the first compute task and the second delay. In this case, the CMF may send information about the second computing resource, to trigger the access network element to process the first compute task by using the second computing resource. This means that the foregoing steps such as S806, S807, and S808 may be repeatedly performed.

In this embodiment of this application, the CMF may determine the first computing resource based on the delay threshold of the first compute task and the first delay, which is equivalent to determining, based on the end-to-end delay and the transmission delay of the first compute task, a computing resource (the first computing resource) that the compute node should provide for the first compute task. The access network element processes the first compute task based on the first computing resource. In this case, the sum of the processing delay of the access network element and the packet transmission delay (namely, the actual end-to-end delay) can meet the end-to-end delay requirement of the first compute task, to improve access efficiency of the first compute task and improve user experience. In addition, if an air interface delay between the UE and the access network element changes, the CMF may determine the second computing resource based on the delay threshold of the first compute task and a changed delay (the second delay), which is equivalent to still determining, based on the end-to-end delay and the transmission delay of the first compute task, a computing resource (the second computing resource) that the compute node should provide for the first compute task. In this way, processing of the access network element can still meet the end-to-end delay requirement.

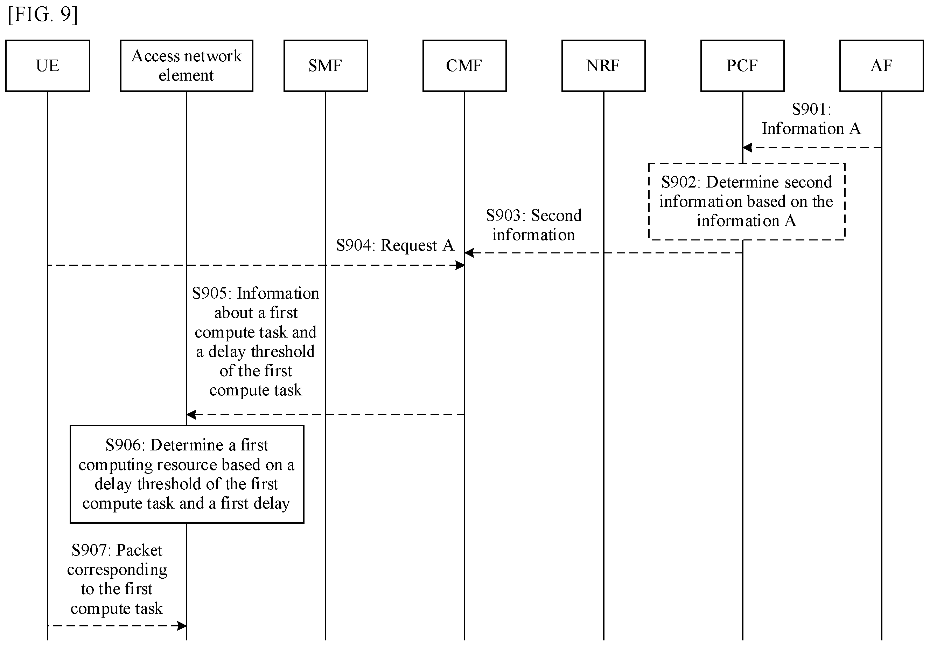

An embodiment of this application provides a seventh communication method. FIG. 9 is a flowchart of the method. In the method, for example, the compute node is an access network element.

S901: An AF sends information A. Correspondingly, a PCF receives the information A.

For more content of S901, refer to S301 in the embodiment shown in FIG. 3A.

S902: The PCF determines second information based on the information A.

For more content of S902, refer to S302 in the embodiment shown in FIG. 3A.

S903: The PCF sends the second information to a CMF. Correspondingly, the CMF receives the second information from the PCF.

For more content of S903, refer to S303 in the embodiment shown in FIG. 3A.

S904: UE sends a request A to the CMF. Correspondingly, the CMF receives the request A from the UE.

The request A is, for example, a session establishment request message, and may be used to request to establish a PDU session. This means that the UE initiates a session establishment procedure. Alternatively, the request A may be another message. This is not specifically limited. The request A includes, for example, a DNN and/or S-NSSAI corresponding to the PDU session. Optionally, if the request A is a session establishment request message, the request A may further include an identifier of a PDU session that is requested to be established.

For more content of S904, refer to S304 in the embodiment shown in FIG. 3A.

S905: The CMF sends information about a first compute task and a delay threshold of the first compute task to an access network element. Alternatively, the CMF may send information about a first compute task and an end-to-end delay requirement of the first compute task to an access network element, and the access network element determines a delay threshold of the first compute task based on the end-to-end delay requirement.

For descriptions of concepts such as the information about the first compute task, the end-to-end delay requirement, and the delay threshold, refer to the related descriptions of the embodiment shown in FIG. 3A and FIG. 3B.

Optionally, the CMF may further send first time information to the access network element. For more content of S905, for example, a sending manner of the CMF and information sent by the CMF, refer to S305 in the embodiment shown in FIG. 3A.

S906: The access network element determines a first computing resource based on a delay threshold of the first compute task and the first delay.

After receiving the information (for example, the information about the first compute task, or the information about the first compute task and the first time information) in S905, the access network element may predict a delay for transmitting the first compute task over an air interface, that is, predict a transmission delay of the first compute task between the UE and the access network element. For example, the transmission delay is the first delay. If the access network element receives the first time information, the access network element may start to predict the transmission delay of the first compute task between the UE and the access network element at time indicated by the first time information.

In this embodiment of this application, a computing resource may be determined by the access network element, without being determined by the CMF. After determining the computing resource, the access network element may directly provide the computing resource, thereby simplifying interaction between the access network element and the CMF, reducing signaling overheads, and improving efficiency of determining the computing resource.

Optionally, the access network element may send information about the first computing resource to the CMF, to notify the CMF that the access network element provides the first computing resource for the first compute task.

S907: The UE sends a packet corresponding to the first compute task. Correspondingly, the access network element receives the packet. The packet is, for example, a data packet.

For example, the request A in S904 is a session establishment request message. Before S907, a PDU session that is requested to be established by the session request message is established. The UE may send the packet corresponding to the first compute task in the established PDU session. After receiving the packet, the access network element may process the packet by using the first computing resource. Optionally, the access network element may further send a processing result of the packet to the UE.

In this embodiment of this application, if the air interface delay changes, the access network element may re-determine a computing resource. For example, the access network element may determine, in real time, a transmission delay for transmitting the packet corresponding to the first compute task between the UE and the access network element, or may periodically determine a transmission delay for transmitting the packet corresponding to the first compute task between the UE and the access network element. If the access network element determines that the transmission delay changes, for example, changes from the first delay to a second delay, the access network element may determine the computing resource, for example, a second computing resource, based on the delay threshold of the first compute task and the second delay. In this case, the access network element processes the first compute task by using the second computing resource. This means that S906 and the like described above may be repeatedly performed.

Alternatively, after the second computing resource is determined, whether the access network element can provide the second computing resource may be determined, for example, whether the second computing resource is greater than a maximum computing resource of the access network element is determined. If the second computing resource is a computing resource that can be provided by the access network element, the access network element may process the first compute task by using the second computing resource. Alternatively, if the access network element cannot provide the second computing resource, for example, the second computing resource is greater than the maximum computing resource supported by the access network element, the access network element may send a fifth request to the CMF, to request the CMF to reselect a compute node.

Optionally, the fifth request may further include the information about the second computing resource. After receiving the fifth request, the CMF may reselect a compute node. For example, the CMF selects a UPF as the compute node, or selects a service server as the compute node, or may select another network element as the compute node. The CMF may request the NRF to assist in selecting a compute node, or the CMF may select a compute node. For details, refer to the descriptions of the foregoing method embodiments. After selecting the compute node, the CMF may send a fourth request. For example, the fourth request is directly sent to the new compute node, or is sent to the new compute node in an indirect manner. A manner of sending the fourth request may vary based on different compute nodes. For details, refer to the descriptions of the foregoing method embodiments. The fourth request includes, for example, information about the second computing resource. After receiving the information about the second computing resource, the new compute node may perform processing such as instantiation on the second computing resource, to provide the second computing resource for the first compute task. Optionally, the new compute node may further send response information to the CMF.

In this embodiment of this application, the access network element may determine the first computing resource based on the delay threshold of the first compute task and the first delay, which is equivalent to determining, based on the end-to-end delay and the transmission delay of the first compute task, a computing resource (the first computing resource) that the compute node should provide for the first compute task. The access network element processes the first compute task based on the first computing resource. In this case, the sum of the processing delay of the access network element and the packet transmission delay (namely, the actual end-to-end delay) can meet the end-to-end delay requirement of the first compute task, to improve access efficiency of the first compute task and improve user experience. The access network element determines a computing resource, and the access network element is also a provider of the computing resource. Therefore, participation of a core network is reduced, signaling overheads can be reduced, and efficiency of determining the computing resource can be improved. In addition, if an air interface delay between the UE and the access network element changes, the access network element may determine the second computing resource based on the delay threshold of the first compute task and a changed delay (the second delay), which is equivalent to still determining, based on the end-to-end delay and the transmission delay of the first compute task, a computing resource (the second computing resource) that the compute node should provide for the first compute task. In this way, processing of the new compute node can still meet the end-to-end delay requirement. In addition, if the second computing resource exceeds a capability of the access network element, the CMF may further select a new compute node, and a type of the compute node is not limited, thereby improving selection flexibility.

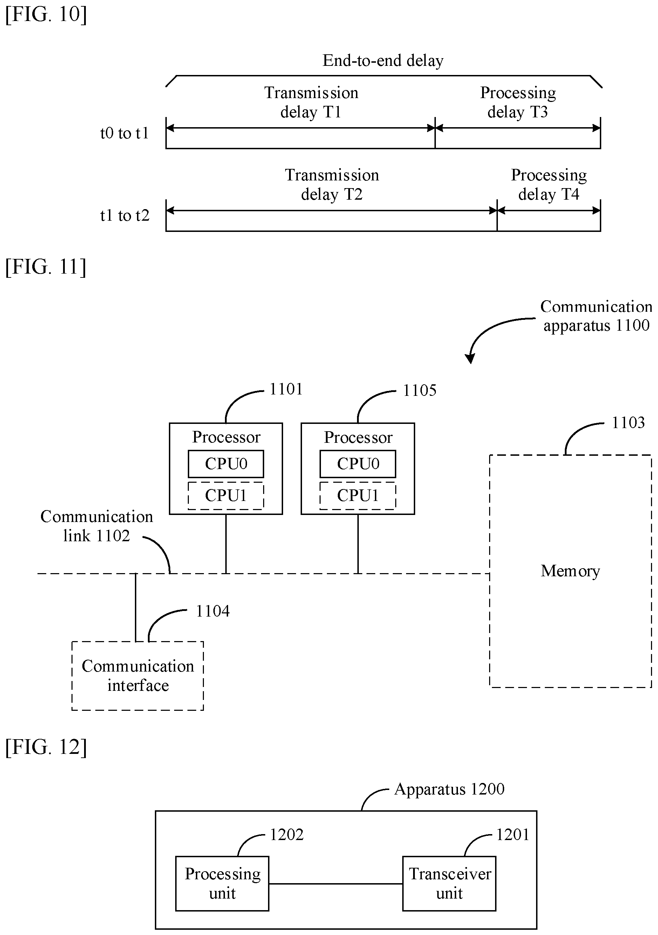

According to any one of the foregoing embodiments, a computing resource can be elastically adjusted, so that the computing resource can meet the end-to-end delay requirement. For example, FIG. 10 is a diagram of end-to-end delay assurance. For example, at a moment t0 to a moment t1, the transmission delay of the first compute task is T1, and the CMF or the access network element determines, based on the delay threshold of the first compute task and T1, that the processing delay of the compute node is T3. In this case, the CMF or the access network element may determine a computing resource, for example, the first computing resource, based on T3. At the moment t1 to a moment t2, the transmission delay of the first compute task changes, for example, changes to T2, and the CMF or the access network element may re-determine, based on the delay threshold of the first compute task and T2, that the processing delay of the compute node is T4. In this case, the CMF or the access network element may determine a computing resource, for example, the second computing resource, based on T4. It can be learned that even if the transmission delay changes, the CMF or the access network element may re-determine a computing resource, so that transmission and processing of the first compute task can meet the end-to-end delay requirement.

FIG. 11 is a diagram of a structure of a communication apparatus according to an embodiment of this application. The communication apparatus 1100 may be the CMF or a circuit system of the CMF in the embodiment shown in any one of FIG. 2A, FIG. 3A and FIG. 3B, FIG. 5, FIG. 6, FIG. 7, FIG. 8, or FIG. 9, and is configured to implement the method corresponding to the CMF in the foregoing method embodiments. Alternatively, the communication apparatus 1100 may be the first compute node or a circuit system of the first compute node in the embodiment shown in any one of FIG. 2A, FIG. 3A and FIG. 3B, FIG. 5, FIG. 6, FIG. 7, FIG. 8, or FIG. 9, and is configured to implement the method corresponding to the first compute node in the foregoing method embodiments. Alternatively, the communication apparatus 1100 may be the second compute node or a circuit system of the second compute node in the embodiment shown in FIG. 5 or FIG. 7, and is configured to implement the method corresponding to the second compute node in the foregoing method embodiments. Alternatively, the communication apparatus 1100 may be the access network element or a circuit system of the access network element in the embodiment shown in any one of FIG. 2A, FIG. 3A and FIG. 3B, FIG. 5, FIG. 6, FIG. 7, FIG. 8, or FIG. 9, and is configured to implement the method corresponding to the access network element in the foregoing method embodiments. The communication apparatus 1100 may be the PCF or a circuit system of the PCF in the embodiment shown in any one of FIG. 2A, FIG. 3A and FIG. 3B, FIG. 5, FIG. 6, FIG. 7, FIG. 8, or FIG. 9, and is configured to implement the method corresponding to the PCF in the foregoing method embodiments. Alternatively, the communication apparatus 1100 may be the NEF or a circuit system of the NEF in the embodiment shown in any one of FIG. 2A, FIG. 3A and FIG. 3B, FIG. 5, FIG. 6, FIG. 7, FIG. 8, or FIG. 9, and is configured to implement the method corresponding to the NEF in the foregoing method embodiments. For example, a circuit system is a chip system.

The communication apparatus 1100 includes at least one processor 1101. The processor 1101 may be configured for internal processing of the apparatus to implement a specific control processing function. Optionally, the processor 1101 includes instructions. Optionally, the processor 1101 may store data. Optionally, different processors may be independent components, may be located at different physical locations, or may be located on different integrated circuits. Optionally, different processors may be integrated into one or more processors, for example, integrated into one or more integrated circuits.

Optionally, the communication apparatus 1100 includes one or more memories 1103, configured to store instructions. Optionally, the memory 1103 may further store data. The processor and the memory may be separately disposed, or may be integrated together.

Optionally, the communication apparatus 1100 includes a communication line 1102 and at least one communication interface 1104. The memory 1103, the communication line 1102, and the communication interface 1104 are all optional, and therefore are all represented by dashed lines in FIG. 11.

Optionally, the communication apparatus 1100 may further include a transceiver and/or an antenna. The transceiver may be configured to send information to another apparatus or receive information from another apparatus. The transceiver may be referred to as a transceiver machine, a transceiver circuit, an input/output interface, or the like, and is configured to implement a transceiver function of the communication apparatus 1100 through the antenna. Optionally, the transceiver includes a transmitter (transmitter) and a receiver (receiver). For example, the transmitter may be configured to generate a radio frequency (radio frequency) signal based on a baseband signal, and the receiver may be configured to convert the radio frequency signal into the baseband signal.

The processor 1101 may include a general-purpose central processing unit (central processing unit, CPU), a microprocessor, an application specific integrated circuit (application specific integrated circuit, ASIC), or one or more integrated circuits configured to control program execution of solutions of this application.

The communication line 1102 may include a channel for transmitting information between the foregoing components.

The communication interface 1104 is configured to communicate, via any apparatus like a transceiver, with another device or a communication network, like an Ethernet network, a radio access network (radio access network, RAN), a wireless local area network (wireless local area networks, WLAN), or a wired access network.

The memory 1103 may be a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), or a magnetic disk storage medium or another magnetic storage device, or any other medium that can be configured to carry or store expected program code in a form of instructions or a data structure and that is accessible by a computer, but is not limited thereto. The memory 1103 may exist independently, and is connected to the processor 1101 through the communication line 1102. Alternatively, the memory 1103 may be integrated with the processor 1101.

The memory 1103 is configured to store computer-executable instructions for executing the solutions of this application, and the processor 1101 controls the execution. The processor 1101 is configured to execute the computer-executable instructions stored in the memory 1103, to implement a step performed by the CMF, the first compute node, the second compute node, the access network element, the PCF, or the NEF in the embodiment shown in any one of FIG. 2A, FIG. 3A and FIG. 3B, FIG. 5, FIG. 6, FIG. 7, FIG. 8, or FIG. 9.

Optionally, the computer-executable instructions in this embodiment of this application may also be referred to as application program code. This is not specifically limited in this embodiment of this application.

In specific implementation, in an embodiment, the processor 1101 may include one or more CPUs, for example, a CPU 0 and a CPU 1 in FIG. 11.

In specific implementation, in an embodiment, the communication apparatus 1100 may include a plurality of processors, for example, the processor 1101 and a processor 1105 in FIG. 11. Each of the processors may be a single-core (single-CPU) processor, or may be a multi-core (multi-CPU) processor. The processor herein may be one or more devices, circuits, and/or processing cores configured to process data (for example, computer program instructions).

When the apparatus shown in FIG. 11 is a chip, for example, a chip of the CMF, a chip of the first compute node, a chip of the second compute node, a chip of the access network element, a chip of the PCF, or a chip of the NEF, the chip includes a processor 1101 (which may further include a processor 1105), a communication line 1102, and a communication interface 1104. Optionally, the chip may include a memory 1103. Specifically, the communication interface 1104 may be an input interface, a pin, a circuit, or the like. The memory 1103 may be a register, a cache, or the like. The processor 1101 and the processor 1105 each may be a general-purpose CPU, a microprocessor, an ASIC, or one or more integrated circuits configured to control program execution of the communication method in any one of the foregoing embodiments.

In embodiments of this application, the apparatus may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. For example, when each functional module is obtained through division based on a corresponding function, FIG. 12 shows a diagram of an apparatus. The apparatus 1200 may be the first UE or the second UE in the foregoing method embodiments, a chip in the CMF, a chip in the first compute node, a chip in the second compute node, a chip in the access network element, a chip in the PCF, or a chip in the NEF. The apparatus 1200 includes a processing unit 1202 and a transceiver unit 1201.

It should be understood that the apparatus 1200 may be configured to implement a step performed by the CMF, the first compute node, the second compute node, the access network element, the PCF, or the NEF in the communication method in embodiments of this application. For related features, refer to the embodiment shown in any one of FIG. 2A, FIG. 3A and FIG. 3B, FIG. 5, FIG. 6, FIG. 7, FIG. 8, or FIG. 9. Details are not described herein again.

Optionally, functions/implementation processes of the transceiver unit 1201 and the processing unit 1202 in FIG. 12 may be implemented by the processor 1101 in FIG. 11 by invoking the computer-executable instructions stored in the memory 1103. Alternatively, a function/an implementation process of the processing unit 1202 in FIG. 12 may be implemented by the processor 1101 in FIG. 11 by invoking the computer executable instructions stored in the memory 1103, and a function/an implementation process of the transceiver unit 1201 in FIG. 12 may be implemented by the communication interface 1104 in FIG. 11.

Optionally, when the apparatus 1200 is a chip or a circuit, functions/implementation processes of the transceiver unit 1201 may alternatively be implemented through a pin, a circuit, or the like. Optionally, the transceiver unit 1201 may include a sending unit and/or a receiving unit. The sending unit is configured to implement a sending function, and the receiving unit is configured to implement a receiving function. Alternatively, the transceiver unit 1201 may be an entire module that can implement a sending function and/or a receiving function. Optionally, the transceiver unit 1201 may be implemented by a transceiver.

This application further provides a computer-readable storage medium. The computer-readable storage medium stores a computer program or instructions. When the computer program or the instructions are run, the method performed by the CMF, the first compute node, the second compute node, the access network element, the PCF, or the NEF in the foregoing method embodiments is implemented. In this way, the functions in the foregoing embodiments may be implemented in a form of a software functional unit and sold or used as an independent product. Based on such an understanding, the technical solutions of this application essentially, or the part contributing to conventional technologies, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The storage medium includes any medium that can store program code, such as a USB flash drive, a removable hard disk, a ROM, a RAM, a magnetic disk, or an optical disc.

This application further provides a computer program product. The computer program product includes computer program code. When the computer program code is run on a computer, the computer is caused to perform the method performed by the CMF, the first compute node, the second compute node, the access network element, the PCF, or the NEF in any one of the foregoing method embodiments.

An embodiment of this application further provides a processing apparatus, including a processor and an interface. The processor is configured to perform the method performed by the CMF, the first compute node, the second compute node, the access network element, the PCF, or the NEF in any one of the foregoing method embodiments.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive, (solid-state disk, SSD)), or the like.

Various illustrative logical units and circuits described in embodiments of this application may implement or operate the described functions by using a general-purpose processor, a digital signal processor (digital signal processor, DSP), an ASIC, a field-programmable gate array (field-programmable gate array, FPGA) or another programmable logical apparatus, a discrete gate or transistor logic, a discrete hardware component, or a design of any combination thereof. The general-purpose processor may be a microprocessor. Optionally, the general-purpose processor may also be any conventional processor, controller, microcontroller, or state machine. The processor may also be implemented by a combination of computing apparatuses, such as a digital signal processor and a microprocessor, multiple microprocessors, one or more microprocessors with a digital signal processor core, or any other similar configuration.

Steps of the methods or algorithms described in embodiments of this application may be directly embedded into hardware, a software unit executed by a processor, or a combination thereof. The software unit may be stored in a RAM, a flash memory, a ROM, an erasable programmable read-only memory (erasable programmable read-only memory, EPROM), an EEPROM, a register, a hard disk, a removable magnetic disk, a CD-ROM, or any other form of storage medium in the art. For example, the storage medium may connect to a processor so that the processor may read information from the storage medium and write information to the storage medium. Optionally, the storage medium may be integrated into a processor. The processor and the storage medium may be disposed in an ASIC, and the ASIC may be disposed in a terminal device. Optionally, the processor and the storage medium may be disposed in different parts of a terminal device.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Mutual reference may be made to content in embodiments of this application. Unless otherwise specified or a logic conflict occurs, terms and/or descriptions in different embodiments are consistent and may be mutually referenced, and technical features in different embodiments may be combined into a new embodiment based on an internal logical relationship between the technical features.

It may be understood that in this embodiment of this application, any one or more of the CMF, the first compute node, the second compute node, the access network element, the PCF, or the NEF may perform some or all of the steps in embodiments of this application. These steps or operations are merely examples. In embodiments of this application, other operations or variations of various operations may be further performed. In addition, the steps may be performed in a sequence different from a sequence presented in embodiments of this application, and it is possible that not all operations in embodiments of this application need to be performed.

## Claims

1. A communication method, wherein the method comprises:
determining a first computing resource based on a delay threshold of a first compute task and a first delay, wherein the first computing resource is a computing resource needed by a compute node to process the first compute task, the delay threshold is related to an end-to-end delay requirement of the first compute task, the end-to-end delay requirement is a delay requirement for transmitting and processing a packet corresponding to the first compute task between a terminal device and the compute node, and the first delay is a transmission delay for transmitting the packet corresponding to the first compute task between the terminal device and an access network element; and
sending a first request, wherein the first request is used to trigger a first compute node to process the first compute task by using the first computing resource.

2. The method according to claim 1, wherein the delay threshold is the end-to-end delay requirement.

3. The method according to claim 1 or 2, wherein the method further comprises:
determining the first compute node based on the first computing resource.

4. The method according to claim 3, wherein determining the first compute node based on the first computing resource comprises:
sending a second request to a first core network element, wherein the second request is used to request to discover the compute node, and the second request further comprises information about the first computing resource; and
receiving information about the first compute node from the first core network element, wherein the information about the first compute node comprises an identifier of the first compute node.

5. The method according to claim 4, wherein the information about the first compute node further comprises information about a maximum computing resource supported by the first compute node.

6. The method according to any one of claims 1 to 5, wherein the method further comprises:
sending information about the first compute task to the access network element;
and
receiving first information from the access network element, wherein the first information comprises information about the first delay.

7. The method according to claim 6, wherein the method further comprises:
sending first time information to the access network element, wherein the first time information indicates time at which the access network element determines the first delay.

8. The method according to claim 6 or 7, wherein the first information further indicates validity duration of the first delay.

9. The method according to any one of claims 1 to 8, wherein the method further comprises:
receiving second information from a second core network element, wherein the second information comprises the information about the first compute task and the end-to-end delay requirement of the first compute task; or
sending a third request to a database network element, wherein the third request is used to request the information about the first compute task and the end-to-end delay requirement of the first compute task, and receiving the information about the first compute task and the end-to-end delay requirement of the first compute task from the database network element.

10. The method according to any one of claims 4 to 9, wherein the information about the first compute task comprises one or more of the following: a maximum uplink data amount corresponding to the first compute task, a maximum downlink data amount corresponding to the first compute task, or an execution periodicity of the first compute task.

11. The method according to any one of claims 1 to 10, wherein the method further comprises:
receiving information about a second delay from the access network element, wherein the second delay is a transmission delay for transmitting the packet corresponding to the first compute task between the terminal device and the access network element, and the second delay is different from the first delay;
determining a second computing resource based on the delay threshold and the second delay, wherein the second computing resource is a computing resource needed by the compute node to process the first compute task; and
sending a fourth request, wherein the fourth request is used to trigger a second compute node to process the first compute task by using the second computing resource.

12. The method according to claim 11, wherein the method further comprises:
when the first compute node is not capable of providing the second computing resource, determining the second compute node based on the second computing resource.

13. The method according to any one of claims 1 to 12, wherein the first compute node is a UPF, an access network element, or a service server.

14. A communication method, wherein the method comprises:
receiving a first request, wherein the first request is used to trigger a first compute node to process a first compute task by using a first computing resource; and
processing, based on the first request, the first compute task by using the first computing resource.

15. The method according to claim 14, wherein the method further comprises:
receiving a fourth request, wherein the fourth request is used to trigger the first compute node to process the first compute task by using a second computing resource;
adjusting, to the second computing resource based on the fourth request, a computing resource scheduled for the first compute task; and
processing the first compute task by using the second computing resource.

16. The method according to claim 14 or 15, wherein the first compute node is a UPF, an access network element, or a service server.

17. The method according to any one of claims 14 to 16, wherein the method further comprises:
sending a registration request, wherein the registration request comprises an identifier of the first compute node and information about a maximum computing resource supported by the first compute node.

18. A communication method, comprising:
receiving information about a first compute task from a core network element;
determining a first delay, wherein the first delay is a transmission delay for transmitting a packet corresponding to the first compute task between a terminal device and an access network element; and
sending first information to the core network element, wherein the first information comprises information about the first delay.

19. The method according to claim 18, wherein
the method further comprises: receiving first time information from the core network element; and
determining the first delay comprises: determining the first delay at time determined based on the first time information.

20. The method according to claim 18 or 19, wherein the first information further indicates validity duration of the first delay.

21. The method according to any one of claims 18 to 20, wherein the method further comprises:
receiving a first request from the core network element, wherein the first request is used to trigger the access network element to process the first compute task by using the first computing resource.

22. The method according to any one of claims 18 to 21, wherein the method further comprises:
determining that the transmission delay for transmitting the packet corresponding to the first compute task between the terminal device and the access network element is changed to a second delay; and
sending information about the second delay to the core network element.

23. A communication apparatus, wherein the communication apparatus comprises a processing unit and a transceiver unit, and the processing unit is coupled to the transceiver unit, to perform the method according to any one of claims 1 to 13, perform the method according to any one of claims 14 to 17, or perform the method according to any one of claims 18 to 22.

24. A communication apparatus, wherein the communication apparatus comprises a processor and a memory, the memory is configured to store a computer program, and the processor is configured to execute the computer program stored in the memory, to cause the communication apparatus to perform the method according to any one of claims 1 to 13, cause the communication apparatus to perform the method according to any one of claims 14 to 17, or cause the communication apparatus to perform the method according to any one of claims 18 to 22.

25. A computer-readable storage medium, wherein the computer-readable storage medium is configured to store a computer program; and when the computer program is run on a computer, the computer is caused to perform the method according to any one of claims 1 to 13, the computer is caused to perform the method according to any one of claims 14 to 17, or the computer is caused to perform the method according to any one of claims 18 to 22.

26. A computer program product, wherein the computer program product comprises a computer program; and when the computer program is run on a computer, the computer is caused to perform the method according to any one of claims 1 to 13, the computer is caused to perform the method according to any one of claims 14 to 17, or the computer is caused to perform the method according to any one of claims 18 to 22.

27. A chip system, wherein the chip system comprises:
a processor and an interface, wherein the processor is configured to invoke instructions from the interface and run the instructions, and when the processor executes the instructions, the method according to any one of claims 1 to 13 is implemented, the method according to any one of claims 14 to 17 is implemented, or the method according to any one of claims 18 to 22 is implemented.

28. A communication system, wherein the communication system comprises a third core network element and a first compute node, wherein
the third core network element is configured to perform the method according to any one of claims 1 to 13; and
the first compute node is configured to perform the method according to any one of claims 14 to 17.

29. The communication system according to claim 28, wherein the communication system further comprises an access network element, wherein
the access network element is configured to perform the method according to any one of claims 18 to 22.
